# EUROPÄISCHE PATENTSCHRIFT

(11) **EP 1 784 591 B1**
(45) Veröffentlichungstag und Bekanntmachung des Hinweises auf die Patenterteilung: **29.10.2008**
(21) Anmeldenummer: 05775339.4
(22) Anmeldetag: 11.08.2005
(51) Int. Cl.: F16H 9/12, F16H 55/56, F16H 63/06, F16H 9/24

(54) **KEGELSCHEIBENUMSCHLINGUNGSGETRIEBE, VERFAHREN ZU DESSEN HERSTELLUNG SOWIE FAHRZEUG MIT EINEM DERARTIGEN GETRIEBE**
SPHERICAL DISK-SHAPED ENVELOPING GEAR SYSTEM, METHOD FOR THE PRODUCTION THEREOF, AND VEHICLE COMPRISING SUCH A GEAR SYSTEM
TRANSMISSION A POULIES CONIQUES ET A COURROIE, SON PROCEDE DE PRODUCTION, ET VEHICULE EQUIPE DE CETTE TRANSMISSION

(30) Priorität: 24.08.2004 DE 102004040826; 28.08.2004 DE 102004041715; 04.09.2004 DE 102004042883; 09.09.2004 DE 102004043536; 14.09.2004 DE 102004044190; 22.09.2004 DE 102004046213
(43) Veröffentlichungstag der Anmeldung: 16.05.2007
(73) Patentinhaber: LuK Lamellen und Kupplungsbau Beteiligungs KG, 77815 Bühl (DE)
(72) Erfinder: GLAS, Ronald, 77880 Sasbach (DE)
(86) Internationale Anmeldenummer: PCT/DE2005/001418
(87) Internationale Veröffentlichungsnummer: WO 2006/021187

(56) Entgegenhaltungen:
- WO-A-02/101264
- WO-A-03/087846
- DE-A1- 19 544 061
- DE-A1- 19 942 309

## Beschreibung

Die Erfindung betrifft ein Automatgetriebe in Form eines Kegelscheibenumschlingungsgetriebes, wie es beispielsweise aus der DE 10 2004 015 215 und weiteren Veröffentlichungen bekannt ist, sowie ein Verfahren zu dessen Herstellung und ein damit ausgerüstetes Fahrzeug.

Ein solches Kegelscheibenumschlingungsgetriebe ist aus der gattungsgemäßen DE 19 942 309 A bekannt.

Automatgetriebe im weiteren Sinne sind Kennungswandler, deren momentane Übersetzung sich selbständig in Abhängigkeit von momentanen oder zu erwartenden Betriebszuständen, wie zum Beispiel Teillast, Schub und Umgebungsparameter, wie zum Beispiel Temperatur, Luftdruck, Luftfeuchtigkeit, stufenweise oder stufenlos verändert. Zu ihnen gehören solche Kennungswandler, die auf einem elektrischen, pneumatischen, hydrodynamischen, hydrostatischen Prinzip oder auf einem aus diesen Prinzipien gemischten Prinzip beruhen.

Die Automatisierung bezieht sich auf die verschiedensten Funktionen, wie zum Beispiel das Anfahren, die Übersetzungswahl, die Art der Übersetzungsveränderung bei verschiedene Betriebssituationen, wobei unter Art der Übersetzungsveränderung zum Beispiel das Schalten von einzelnen Stufen nacheinander, das Überspringen von Schaltstufen und die Geschwindigkeit der Verstellung verstanden werden kann.

Der Wunsch nach Komfort, Sicherheit und vertretbarem Bauaufwand bestimmt den Automatisierungsgrad d. h. wie viele Funktionen selbständig ablaufen.

In der Regel kann der Fahrer manuell in den automatischen Ablauf eingreifen oder ihn für einzelne Funktionen begrenzen.

Automatgetriebe im engeren Sinne, wie sie heute vor allem im Fahrzeugbau verwendet werden, haben in der Regel folgenden Aufbau:

Auf der Antriebsseite des Getriebes befindet sich eine Anfahreinheit in Form einer regelbaren Kupplung, zum Beispiel einer nassen oder trockenen Reibungskupplung, einer hydrodynamischen Kupplung oder einem hydrodynamischen Wandler.

Zu einem hydrodynamischen Wandler wird häufig eine Überbrückungskupplung parallel zum Pumpen- und Turbinenteil geschaltet, welche durch direkte Kraftübertragung den Wirkungsgrad steigert und durch definierten Schlupf bei kritischen Drehzahlen die Schwingung dämpft.

Die Anfahreinheit treibt ein mechanisches, stufenloses oder gestuftes Wechselgetriebe an, das eine Vorwärts-/Rückwärtsfahreinheit, eine Haupt-, Bereichs-, Splitgruppe und/oder einen Variator enthalten kann. Zahnradgetriebegruppen werden, je nach Anforderungen an Laufruhe, Platzverhältnisse und Übertragungsmöglichkeiten, in Vorgelege- oder Planetenbauweise mit Gerad- oder Schrägverzahnung ausgelegt.

Das Ausgangselement des mechanischen Getriebes, eine Welle oder ein Zahnrad, treibt direkt oder indirekt über Zwischenwellen bzw. eine Zwischenstufe mit einer konstanten Übersetzung auf ein Differentialgetriebe, das als separates Getriebe gestaltet sein kann oder ein integrierter Bestandteil des Automatgetriebes ist. Grundsätzlich eignet sich das Getriebe für Längs- und Quereinbau im Fahrzeug.

Zur Verstellung der Übersetzung im mechanischen Getriebe sind hydrostatische, pneumatische und/oder elektrische Stellglieder vorgesehen. Eine Hydraulikpumpe, die nach dem Verdrängungsprinzip arbeitet, liefert Drucköl für die Anfahreinheit, insbesondere die hydrodynamische Einheit, für die hydrostatischen Stellelemente des mechanischen Getriebes und für die Schmierung und Kühlung des Systems. Je nach erforderlichem Druck und Fördervolumen kommen Zahnradpumpen, Schraubenpumpen, Flügelzellenpumpen und Kolbenpumpen, letztere meistens in radialer Bauart, in Frage. In der Praxis haben sich Zahnradpumpen und Radialkolbenpumpen für diesen Zweck durchgesetzt, wobei die Zahnradpumpen wegen ihres geringen Bauaufwandes und die Radialkolbenpumpe wegen des höheren Druckniveaus und der besseren Regelbarkeit Vorteile bieten.

Die Hydraulikpumpe kann an einer beliebigen Stelle des Getriebes an einer ständig von der Antriebseinheit angetriebenen Haupt- oder Nebenwelle angeordnet sein.

Es sind stufenlose Automatgetriebe bekannt, bestehend aus einer Anfahreinheit, einem Planetenwendegetriebe als Vorwärts-/Rückwärtsfahreinheit, einer Hydraulikpumpe, einem Variator, einer Zwischenwelle und einem Differential. Der Variator wiederum besteht aus zwei Kegelscheibenpaaren und einem Umschlingungsorgan. Jedes Kegelscheibenpaar besteht aus einer in axialer Richtung verschiebbaren zweiten Kegelscheibe. Zwischen diesen Kegelscheibenpaaren läuft das Umschlingungsorgan, zum Beispiel ein Schubgliederband, eine Zugkette oder ein Riemen. Über die Verstellung der zweiten Kegelscheibe ändert sich der Laufradius des Umschlingungsorgans und somit die Übersetzung des stufenlosen Automatgetriebes.

Stufenlose Automatgetriebe erfordern ein hohes Druckniveau, um die Kegelscheiben des Variators in allen Betriebspunkten mit der gewünschten Geschwindigkeit verstellen zu können und außerdem mit einem genügenden Basisanpressdruck weitgehend verschleißfrei das Drehmoment zu übertragen.

Bei Kraftfahrzeugen ist der Komfortbedarf im Allgemeinen sehr hoch, speziell auch im Hinblick auf die Akustik. Der Fahrzeugführer und die Insassen wünschen insbesondere bei Kraftfahrzeugen der gehobenen Kategorie keine störenden Geräusche, die aus dem Betrieb der Aggregate des Kraftfahrzeuges entstehen. Der Verbrennungsmotor und auch andere Aggregate wie Getriebe erzeugen jedoch Geräusche, die weitestgehend als störend empfunden werden könnten. So kann es beispielsweise bei stufenlos einstellbaren Getrieben bei der Verwendung einer Laschenkette zu einem Geräusch kommen, da eine solche Laschenkette bedingt durch ihren Aufbau mit Laschen und Bolzen im Betrieb des Getriebes einen sich wiederholenden Schlag durch das Auftreffen der Bolzen auf die Kegelscheiben des Getriebes erzeugt. Akustische Effekte werden bei CVT-Getrieben in der Regel diesen Pineinlauf ("impact") als Anregung zugeschrieben. Diese akustische Anregung erzeugt dann Resonanzen bei den Eigenfrequenzen des Getriebegehäuses (FE-Moden) oder der Wellen (torsionale Moden, Biegemoden).

Ein weiterer akustischer Effekt geht von der CVT-Kette aus, die im gespannten Strang bzw. Trum wie eine Seite schwingen kann, was z. B. durch eine Gleitschiene behinderbar ist. Torsionale Reibschwingungen sind beispielsweise als Rupfen bei Frequenzen von 10 Hz von Kupplungen her bekannt. Wenn der Reibwertverlauf unter Schlupfänderung derart ist, dass der Reibwert abfällt, wird Rupfen angeregt. Hierbei ist bei Automatgetrieben primär der Stahl-Papier-Reibwert relevant.

Eine der Erfindung zugrunde liegende Teilaufgabe liegt darin, die Akustik eines derartigen Getriebes zu verbessern und somit den Komfort insbesondere den Geräuschkomfort eines mit einem derartigen Getriebe ausgerüsteten Fahrzeugs zu verbessern. Eine weitere der Erfindung zugrunde liegende Teilaufgabe liegt darin, nach der Analyse hochfrequenter, starker CVT-Schwingungen und der damit zusammen hängenden Klärung der entsprechenden Wirkmechanismen, geeignete Gegenmaßnahmen darzustellen, um diese Schwingungen, die vorwiegend im akustischen Bereich in der Größenordnung von 400-600 Hz liegen, zu minimieren oder möglichst zu unterbinden. Eine weitere Teilaufgabe der Erfindung liegt darin, die Betriebsfestigkeit von Bauteilen zu erhöhen und somit die Lebensdauer eines derartigen Automatgetriebes zu verlängern. Eine weitere Teilaufgabe der Erfindung liegt darin begründet, die Drehmomentübertragungsfähigkeit eines derartigen Getriebes zu erhöhen bzw. größere Kräfte durch die Bauteile des Getriebes übertragen zu können. Außerdem - so eine weitere Teilaufgabe - soll ein derartiges Getriebe wirtschaftlich gefertigt werden können.

Die Aufgabenteile werden durch die in den Ansprüchen dargelegte sowie in der Beschreibung auch in Zusammenhang mit den Figuren erläuterte Erfindung mit deren Weiterbildungen gelöst.

Aus der Analyse ergibt sich ein simulatorisches Verständnis der Art der Schwingungsform, bei der es sich um eine Bewegung der Kette in der Umschlingung gekoppelt mit einem Kippen und/oder Biegen der jeweiligen Wegscheibe handelt. Bestimmend für die Frequenz der Schwingungen sind zunächst die Kettenmasse und die gesamte Kipp- und Biegesteifigkeit der Wegscheiben. Diese Steifigkeit versteht sich einschließlich der Tellerung der Scheiben in sich, dem Verkippen der Scheiben, der Durchbiegung der Wellen infolge deren Elastizität und der Schrägstellung der Wellen infolge unterschiedlicher Lagersteifigkeiten. Weiterhin sind das Reibwertniveau und der Reibwertverlauf sowie die Drehzahl und die Übersetzung Frequenz bestimmend.

Diese Erkenntnisse sind insofern überraschend, da Schwingungen der Kette im Umschlingungsbogen, also während ihrer Einspannung im Scheibensatz, bislang nicht beschrieben sind und auch der bisher vertretenen Meinung, dass in den Bögen der Reibkontakt zu den Kegelscheiben solche Schwingungen hemmt, widerspricht.

Auch ein Einfluss des CVT-Öls auf derartige Reibschwingungen ist bislang nicht beschrieben, so dass diese Öle bisher lediglich auf hohen und zeitlich stabilen Reibwert sowie geringen Verschleiß entwickelt wurden.

Es ist zwar bekannt, dass bei den verschiebbaren CVT-Kegelscheiben (Wegscheiben) ein Kippspiel zwischen Welle und Wegscheibe einen Einfluss auf den Wirkungsgrad hat, jedoch sind bisher keine schwingenden Biege-, Kipp- oder Taumelbewegungen der Wegscheiben beschrieben.

Bei CVT-Getrieben in Form von Kegelscheibenumschlingungsgetrieben mit einem Umschlingungsmittel, insbesondere mit Kette, werden die Kegelscheiben des Variators durch die Anpresskräfte gegen das Umschlingungsmittel verformt. Diese Anpresskräfte sind erforderlich, um einerseits ein Durchrutschen der Kette bei der Übertragung des Drehmoments zu verhindern und andererseits die Übersetzung des Variators und damit des Getriebes einzustellen und zu verändern. Der Keilspalt, den die Kegelscheibenhälften bilden, wird hierbei unter Last verändert. Unter Berücksichtigung der Formgebung der Kegelscheiben und der Position der entsprechenden Lastangriffspunkte des Umschlingungsmittels wird der Keilspalt dann am stärksten aus der nicht belasteten Lage verformt, wenn die aus der Anpresskraft gegen das Umschlingungsmittel resultierende Belastung am größten ist und die entsprechenden Kraftangriffspunkte am weitesten radial außen, also auf möglichst großem Durchmesser, angeordnet sind. Bei einem CVT in Form eines Kegelscheibenumschlingungsgetriebes werden die Kraftangriffspunkte des Umschlingungsmittels bzw. der Kette oder des Schubgliederbandes maßgeblich durch die Übersetzung des Variators bestimmt. Außerdem ist zu berücksichtigen, dass die Kraftangriffspunkte nicht am gesamten Umfang von 360° auf die Kegelscheiben einwirken, sondern nur in einem Winkelbereich, der durch die entsprechende Übersetzung eingeschränkt und somit kleiner ist. Hieraus ergibt sich eine unsymmetrische Tellerung der Kegelscheibenhälften, wie dies später näher erläutert wird.

Durch diese ungleichmäßige Tellerung und die ungleichmäßige Lastaufteilung innerhalb des Umschlingungsmittels, wird dem Umschlingungsmittel beim Durchlauf der Umschlingung auf der Kegelscheibe eine radiale Bewegung auf die Wellenmitte zu gerichtet aufgezwungen. Hierauf hat auch die Drehrichtung Einfluss, da die Verhältnisse abhängig davon sind, ob das betrachtete Kettenstück Bestandteil des Lasttrums oder des Leertrums ist.

Je größer die Last, umso ausgeprägter treten diese Verformungen auf und umso größer werden die Reibkräfte und Reibwege, die hierdurch entstehen. Diese Reibung führt zu Wirkungsgradverlusten und Verschleiß und wirkt außerdem als Anregungsmechanismus für Reibschwingungen. Die Reibschwingungen können wiederum, beispielsweise durch Körperschallanregungen, Geräusche erzeugen.

Der für die Auslegung kritischste Fall für die oben beschriebenen Effekte ist beim Anfahren mit einem Kegelumschlingungsgetriebe an den abtriebsseitigen Kegelscheiben gegeben. Im Anfahrvorgang ist nämlich die Belastung durch den Antrieb maximal, ebenso wie die Anpresskraft auf das Umschlingungsmittel durch die entsprechende Übersetzung ins Langsame. Durch diese Übersetzung befindet sich das Umschlingungsmittel bzw. die Kette an den abtriebsseitigen Kegelscheiben radial maximal weit außen. Durch diese Belastung werden die abtriebsseitigen Kegelscheiben stark verformt bzw. sehr stark auseinandergedrückt, so dass der Keilspalt sehr groß wird, woraus maximale Reibwege und Reibkräfte resultieren.

Geräuschprobleme können auch durch Schwingungen des Umschlingungsmittels verursacht oder verstärkt werden. Aus diesem Grund ist es anzustreben, die Trumschwingungen zu vermindern oder besser vollständig zu eliminieren. In den bisherigen Lösungen läuft das Trum meistens frei vom Auslauf des einen Scheibensatzes in den Einlauf des gegenüber liegenden Scheibensatzes bzw. Kegelscheibenpaares. Auf dieser freien Wegstrecke zwischen den Einspannungen kann sich eine einer Saitenschwingung ähnliche Schwingung praktisch ungehindert entfalten. Bisher wurden zur Reduzierung der Trumschwingungen ausschließlich mechanische Maßnahmen getroffen, indem zum Beispiel Führungsschienen oder Spannelemente angebracht wurden. Derartige Lösungen bekämpfen jedoch die Schwingungen nicht ursächlich, sondern die Schwingungen werden lediglich in ihrer Amplitude begrenzt. Weiterhin benötigen diese Lösungen separate Bauteile, die zum einen Kosten verursachen und zum anderen einem Verschleiß unterliegen.

Erfindungsgemäß trägt zur Lösung der Aufgabe und zur Verbesserung von Getrieben nach dem Stand der Technik ein Kegelscheibenumschlingungsgetriebe mit den Merkmalen des Anspruchs 1.

Diese Modulationsfrequenz kann unterhalb der Trumeigenfrequenz liegen.

Besonders vorteilhaft kann es sein, wenn die Verstellung der Trumeigenfrequenz über eine synchrone Modulation der Verstelldrücke der antriebsseitigen und abtriebsseitigen Kegelscheibenpaare erfolgt.

Allgemein kann es bei Kegelscheibenumschlingungsgetrieben nach der Erfindung von Vorteil sein, die Modulationsfrequenz und/oder den Modulationshub so hoch anzusetzen, dass der Verstellgradient der Trumeigenfrequenz ein Aufschwingen des Trums beim Durchfahren einer Anregung verhindert.

Weiterhin bezieht sich die Erfindung auf ein Verfahren zum Betrieb eines erfindungsgemäßen Kegelscheibenumschlingungsgetriebes.

Weiterhin trägt zur Lösung der Aufgabe und zur Verbesserung von Getrieben nach dem Stand der Technik ein Kegelscheibenumschlingungsgetriebe bei mit antriebsseitigen und abtriebsseitigen Kegelscheibenpaaren, die jeweils eine Festscheibe und eine Wegscheibe aufweisen, die jeweils auf einer antriebsseitigen und einer abtriebsseitigen Welle angeordnet und über ein Umschlingungsmittel zur Drehmomentübertragung verbindbar sind, wobei die mit dem Umschlingungsmittel zusammenwirkenden Laufflächen der Kegelscheibenpaare eine gerichtete Struktur aufweisen.

Dabei kann es vorteilhaft sein, wenn die Struktur in einem Finish-Prozess (finishen) eingebracht ist.

Allgemein kann es von Vorteil sein, wenn bei einem erfindungsgemäßen Kegelscheibenumschlingungsgetriebe ein Schleifband (Finishband) zur Strukturbildung herangezogen wird.

Besonders vorteilhaft kann es sein, wenn die Bewegungsrichtung des Schleifbandes relativ zur Lauffläche ähnlich gerichtet ist wie die Relativbewegung des Umschlingungsmittels zur Lauffläche im Betrieb.

Durch diese Maßnahme ist es auch möglich, den Einlaufverschleiß der Kette bzw. des Umschlingungsmittels zu verringern, da die Schuppung der Oberfläche von Anfang an günstig gerichtet ist.

Weiterhin kann es vorteilhaft sein, wenn die Nachstellrichtung des Schleifbandes der Bewegungsrichtung entspricht, wobei die Nachstellung getaktet erfolgen kann.

Als besonders vorteilhaft kann es sich erweisen, wenn die Lauffläche eine Rauhigkeit von R_{z} 2 bis 4,5 aufweist.

Bei einem Kegelscheibenumschlingungsgetriebe nach der Erfindung kann es besonders vorteilhaft sein, carbonitrierte Kegelscheiben vorzusehen, um beispielsweise das Verschleißverhalten günstig zu beeinflussen.

Allgemein kann es von Vorteil sein, wenn andere Bearbeitungsschritte derart erfolgen, dass die Bewegungsrichtung des Bearbeitungsmittels relativ zur Lauffläche der Kegelscheibe ähnlich gerichtet ist wie die Relativbewegung des Umschlingungsmittels zur Lauffläche im Betrieb, wobei die Bearbeitungsschritte dem Finishen vorgeschaltet sein oder das Finishen ersetzen können.

Weiterhin trägt zur Lösung der Aufgabe und zur Verbesserung von Getrieben nach dem Stand der Technik, bei dem beispielsweise die vier Kegelscheiben geometrisch hinsichtlich Tellerform und Steifigkeit ähnlich ausgeführt sind, ein Kegelscheibenumschlingungsgetriebe bei mit antriebsseitigen und abtriebsseitigen Kegelscheibenpaaren, die jeweils eine Festscheibe und eine Wegscheibe aufweisen, die jeweils auf einer antriebsseitigen und einer abtriebsseitigen Welle angeordnet und über ein Umschlingungsmittel verbindbar sind, wobei das Kegelscheibenumschlingungsgetriebe einen steifigkeitsoptimierten Variator aufweist.

Weiterhin trägt zur Lösung der Aufgabe und zur Verbesserung von Getrieben nach dem Stand der Technik ein Kegelscheibenumschlingungsgetriebe bei mit antriebsseitigen und abtriebsseitigen Kegelscheibenpaaren, die jeweils eine Festscheibe und eine Wegscheibe aufweisen, die jeweils auf einer antriebsseitigen und einer abtriebsseitigen Welle angeordnet und über ein Umschlingungsmittel zur Drehmomentübertragung verbindbar sind, wobei ein Schiebesitz zumindest einer Wegscheibe in deren radial innerem Bereich und zumindest ein Schiebesitz zumindest einer Wegscheibe in deren radial äußerem Bereich angeordnet ist.

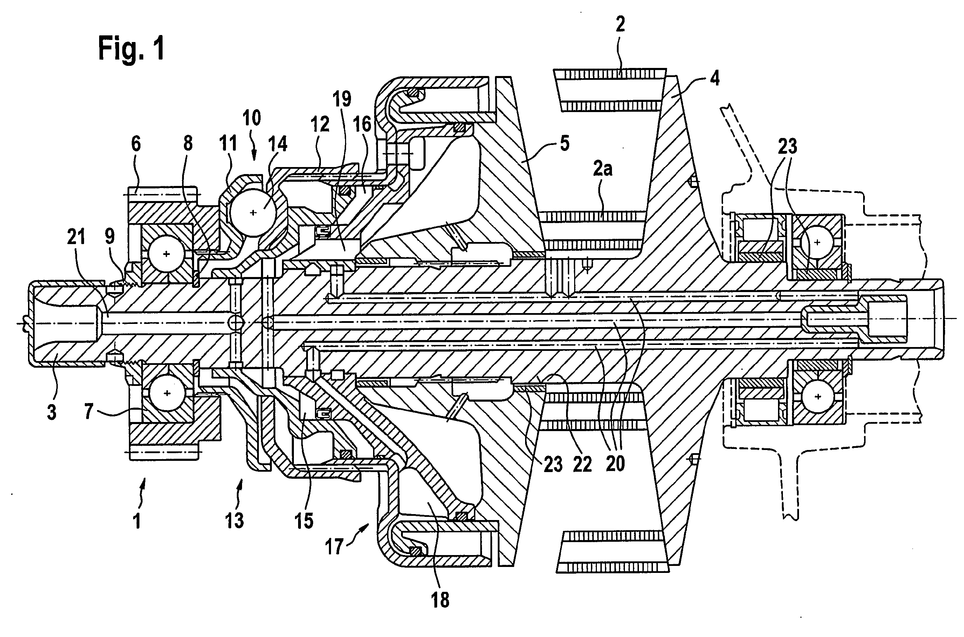

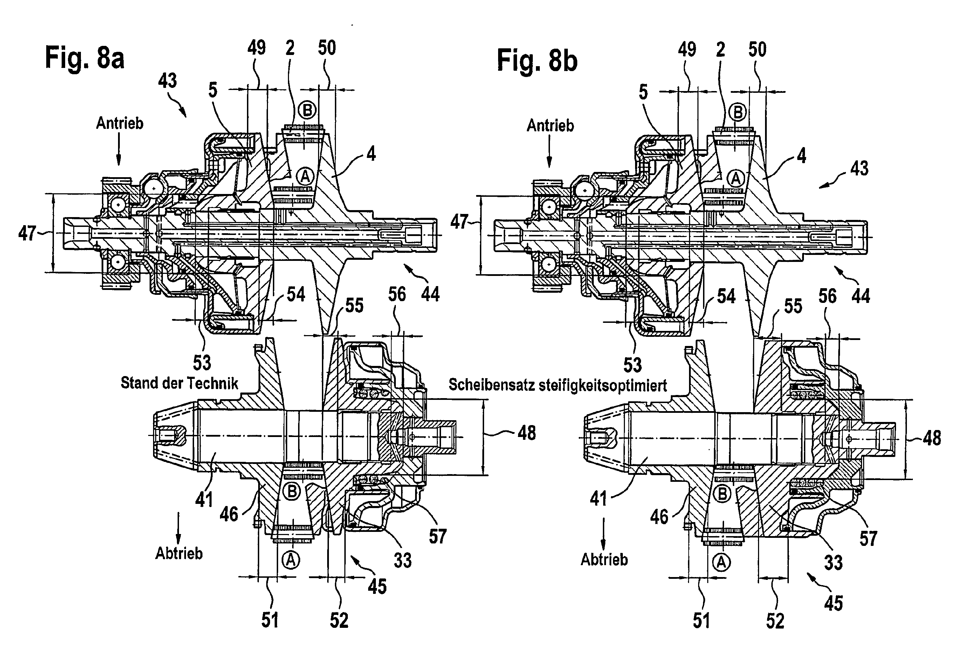

Bei den wellennahen Schiebesitzanordnungen, wie sie beispielsweise auch in Figur 1 und in den Figuren 8a und 8b gezeigt sind, wird die Länge des gesamten Scheibensatzes unter anderem bestimmt durch die Länge der Kegelscheibe und den im Anschluss folgenden Bauteilen, wobei die Schiebesitze Einwirkung auf die Kegelscheibenlänge haben. Wird einer der Schiebesitze nach radial außen verlagert, so können die im Anschluss folgenden Bauteile unter dem Schiebesitz angeordnet werden, so dass sie radial innerhalb des radial außen angeordneten Schiebesitzes zu liegen kommen, wodurch sich axialer Bauraum einsparen lässt. In diesem Raum radial innerhalb dieses Schiebesitzes kann man zum Beispiel die Lagerung des Scheibensatzes unterbringen, einen Teil des Gehäuses mit den Dreheinführungen zur Fluidversorgung des jeweiligen Scheibensatzes, eine Hydraulikpumpe oder eine Antriebseinheit für eine Hydraulikpumpe.

Weiterhin ist es beispielsweise möglich, den neu hinzugewonnenen Bauraum im inneren Bereich für ein Verteilergetriebe einer Allradanordnung zu verwenden.

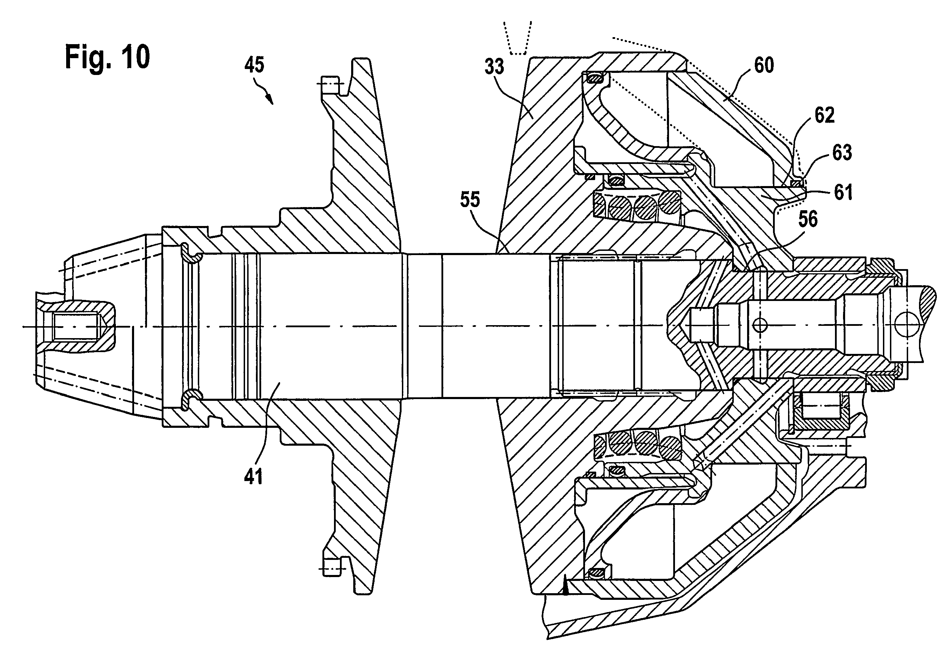

Besonders vorteilhaft kann es bei einem Kegelscheibenumschlingungsgetriebe nach der Erfindung sein, wenn die Wegscheibe zwei Schiebesitze aufweist, während es, beispielsweise hinsichtlich der Steifigkeit von Vorteil sein kann, wenn die Wegscheibe drei Schiebesitze aufweist, wie dies z. B. in Figur 10 dargestellt und in diesem Zusammenhang beschrieben ist.

Von Vorteil kann es weiterhin sein, wenn unter Heranziehung des radial außen angeordneten Schiebesitzes eine Fliehölhaube gebildet ist, wodurch beispielsweise im radial inneren Bereich zusätzlicher Bauraum gewonnen werden kann.

Bei einem Kegelscheibenumschlingungsgetriebe nach der Erfindung kann die Schiebesitzanordnung am antriebsseitigen und/oder abtriebsseitigen Kegelscheibenpaar vorgesehen sein.

Da die zusätzlich notwendige axiale Bauraumlänge des Schiebesitzes, die aus einer in Verlängerung des Schiebesitzes angebrachten Dichtung resultiert, nicht bauraumbestimmend ist, kann der radial außen angeordnete Schiebesitz durch eine axial ihm benachbart angeordnete Dichtung abgedichtet werden.

Allgemein kann es bei einem erfindungsgemäßen Kegelscheibenumschlingungsgetriebe von Vorteil sein, die Lagerung der Wegscheibe radial innerhalb des radial außen angeordneten Schiebesitzes anzuordnen.

Vorteilhaft z. B. hinsichtlich der fertigungsgerechten Gestaltung kann es sein, wenn der radial außen angeordnete Schiebesitz unter Heranziehung eines Bauteils gebildet wird, das mit der Wegscheibe verbunden ist, wobei diese Verbindung eine Schweißverbindung sein kann.

Außerdem kann unter Heranziehung dieses Bauteils eine Fliehölhaube gebildet werden, die zur drehzahlabhängigen Fliehölkompensation herangezogen werden kann, wobei auch zwei Fliehölkammern gebildet werden können, um eine noch höhere Fliehölkompensation zu erreichen.

Besonders vorteilhaft kann es sein, wenn die Steifigkeit bei radial außen angreifender Kraft beim abtriebsseitigen Scheibensatz deutlich größer als beim antriebsseitigen ausgeführt ist, wobei es sich als Vorteil erweisen kann, wenn die Steifigkeit um den Faktor 1,2 bis 1,6 größer ausgeführt ist.

Es kann auch von Vorteil sein, wenn die abtriebsseitige Wegscheibe eine deutlich höhere Steifigkeit aufweist als die antriebsseitige Wegscheibe.

Bei einem Kegelscheibenumschlingungsgetriebe nach der Erfindung kann es vorteilhaft sein, wenn die abtriebsseitigen Kegelscheiben einen geometrisch deutlich massiveren Kegelscheibenteller als die antriebsseitigen Kegelscheiben aufweisen.

Weiterhin kann es zweckmäßig sein, wenn die abtriebsseitige Wegscheibe einen geometrisch deutlich massiveren Kegelscheibenhals als die antriebsseitige Wegscheibe aufweist.

Es kann sich als vorteilhaft erweisen, wenn die abtriebsseitige Wegscheibe einen geometrisch deutlich massiveren Kegelscheibenteller als die abtriebsseitige Festscheibe aufweist.

Von Vorteil kann es sein, wenn die antriebsseitige Wegscheibe einen geometrisch deutlich massiveren Kegelscheibenteller als die antriebsseitige Festscheibe aufweist.

Es kann sich auch als zweckmäßig erweisen, wenn die abtriebsseitige Wegscheibe ein im Mittel kleineres Führungsspiel als die antriebsseitige Wegscheibe aufweist.

Weiterhin kann es von Vorteil sein, wenn die abtriebsseitige Wegscheibe einen deutlich längeren großen Führungssitz als die antriebsseitige Wegscheibe aufweist.

Zweckmäßig kann es sein, wenn zumindest eine Wegscheibe zumindest eine einstückig mit ihr ausgeführte Dichtungslaufbahn aufweist.

Es kann auch vorteilhaft sein, wenn zumindest eine Wegscheibe zwei direkt verbundene Dichtungslaufbahnen aufweist.

Je nach Ausführungsform kann es zweckmäßig sein, die Dichtungslaufbahn spanabhebend oder spanlos herzustellen.

Weiterhin kann in zusammengefahrenem Zustand neben der zumindest einen Dichtstelle ein freier Bereich vorgesehen sein, der als Schmutzraum dienen kann.

Bei einem erfindungsgemäßen Kegelscheibenumschlingungsgetriebe kann es von Vorteil sein, wenn die abtriebsseitige Wegscheibe einen zylindrischen Kegelscheibenhals aufweist, wobei der Kegelscheibenhals als Federzentrierung dienen kann, und/oder wenn der Kegelscheibenhals eine halbrunde Nut aufweist, die als Federanlage dienen kann.

Allgemein kann es vorteilhaft sein, wenn die abtriebsseitige Wegscheibe eine radial weit außen liegende Druckfeder aufweist.

Weiterhin kann es von Vorteil sein, wenn die abtriebsseitige Wegscheibe zumindest ein aufgesetztes Blechteil aufweist, das als Dichtungslaufbahn für zumindest eine Dichtung dienen kann.

Abhängig z. B. von der Bauform des Variators kann die Feder zylindrisch, tailliert oder kegelig ausgeführt sein.

Allgemein kann es von Vorteil sein, wenn die abtriebsseitige Festscheibe eine deutlich höhere Steifigkeit als die antriebsseitige Festscheibe aufweist.

Besonders vorteilhaft kann es sein, wenn der Variator nach dem Doppelkolbenprinzip aufgebaut ist, wie dies beispielsweise in der DE 103 54 720.7 beschrieben ist.

Zur Lösung des Problems kann es erforderlich sein, mehr als einen der beeinflussbaren Parameter zu berücksichtigen und so z. B. bestimmte Eigenschaften des Öls mit bestimmten mechanischen Ausgestaltungen zu kombinieren.

Zur Lösung der Aufgabe kann auch ein Kegelscheibenumschlingungsgetriebe beitragen mit antriebsseitigen und abtriebsseitigen Kegelscheibenpaaren, die jeweils eine Festscheibe und eine Wegscheibe aufweisen, die jeweils auf einer antriebsseitigen und einer abtriebsseitigen Welle angeordnet und über ein Umschlingungsmittel zur Drehmomentübertragung verbindbar sind, wobei zumindest einer der aufgeführten Faktoren hinsichtlich der Akustik des Getriebes optimiert wird:
- Viskoses bzw. hydraulisches Medium in Form von Öl,
- Oberflächenbeschaffenheit der Kontaktbereiche zwischen Kegelscheibe und Umschlingungsmittel,
- Geometrie zumindest einer Kegelscheibe,
- Dämpfung zumindest einer Kegelscheibe,
- Führung zumindest einer Kegelscheibe.

Dabei kann es von Vorteil sein, wenn ein Öl mit einem reibgeschwindigkeitsunempfindlichen Reibwert Verwendung findet. Weiterhin kann es vorteilhaft sein, die Kontaktflächen zwischen Kegelscheibe und Umschlingungsmittel zu optimieren, z. B. hinsichtlich ihrer Topographie.

Von Vorteil kann es weiterhin sein, mindestens eine steifigkeitsoptimierte Kegelscheibe und/oder zumindest eine gedämpfte Kegelscheibe vorzusehen. Es kann sich auch als vorteilhaft erweisen, zumindest eine radial außen geführte Kegelscheibe in das Getriebe zu integrieren.

Weiterhin bezieht sich die Erfindung auf ein Verfahren zur Herstellung eines erfindungsgemäßen Getriebes.

Des Weiteren bezieht sich die Erfindung auf ein Fahrzeug mit einem erfindungsgemäßen Getriebe.

Die Erfindung wird im Folgenden anhand schematischer Zeichnungen beispielsweise mit weiteren Einzelheiten erläutert.

Es stellen dar:
- Figur 1: eine Teilansicht eines Kegelscheibenumschlingungsgetriebes,
- Figur 2: eine im Wesentlichen der Figur 1 entsprechende Darstellung einer weiteren Ausführungsform,
- Fig. 3 und 4: Diagramme über Reibwertzusammenhänge,
- Fig. 5 und 6: schematische Ausgestaltungsmöglichkeiten von Wegscheiben,
- Figur 7: schematisch die unsymmetrische Tellerung einer Kegelscheibe,
- Figur 8a: ein Kegelscheibenumschlingungsgetriebe mit geometrisch ähnlichen Kegelscheibensätzen,
- Figur 8b: ein Kegelscheibenumschlingungsgetriebe mit steifigkeitsoptimierten Kegelscheibensätzen,
- Fig. 9 und 10: Ausführungsbeispiele abtriebsseitiger Kegelscheibenpaare,
- Fig. 11 und 12: einen antriebsseitigen Kegelscheibensatz,
- Figur 13: eine vergrößerte Darstellung des Bereichs XIII in Figur 11,
- Figur 14: einen abtriebsseitigen Kegelscheibensatz,
- Figur 15: eine Teilansicht eines abtriebsseitigen Kegelscheibensatzes,
- Figur 16: einen Ausschnitt aus einer Kegelscheibe,
- Figur 17: schematisch einen Variator.

Figur 1 zeigt nur einen Teil eines Kegelscheibenumschlingungsgetriebes, nämlich den von einem Antriebsmotor, wie beispielsweise einem Verbrennungsmotor angetriebenen antriebs- oder eingangsseitigen Teil des Kegelscheibenumschlingungsgetriebes 1. Bei einem vollständig ausgeführten Kegelscheibenumschlingungsgetriebe ist diesem eingangsseitigen Teil ein komplementär ausgebildeter abtriebsseitiger Teil des stufenlos einstellbaren Kegelscheibenumschlingungsgetriebes zugeordnet, wobei beide Teile über ein Umschlingungsmittel in der Form beispielsweise einer Laschenkette 2 zur Momentenübertragung miteinander verbunden sind. Das Kegelscheibenumschlingungsgetriebe 1 weist eingangsseitig eine Welle 3 auf, die bei dem dargestellten Ausführungsbeispiel einstückig mit einer feststehenden Kegelscheibe oder Festscheibe 4 ausgebildet ist. Diese axial feststehende Kegelscheibe 4 befindet sich in Axiallängsrichtung der Welle 3 einer axial verlagerbaren Kegelscheibe oder Wegscheibe 5 benachbart gegenüber.

Bei der Darstellung nach Fig. 1 ist die Laschenkette 2 am antriebsseitigen Kegelscheibenpaar 4, 5 in einer radial äußeren Stellung dargestellt, die sich dadurch ergibt, dass die axial verlagerbare Kegelscheibe 5 in der Zeichnung in Richtung nach rechts verlagert wird und diese Verlagerungsbewegung der axial verlagerbaren Kegelscheibe 5 zu einer Bewegung der Laschenkette 2 in Richtung nach radial außen führt, wodurch sich eine Übersetzungsänderung des Getriebes ins Schnelle ergibt.

Die axial verlagerbare Kegelscheibe 5 kann in an sich bekannter Weise in der Zeichnungsebene auch nach links verlagert werden, wobei sich in dieser Stellung die Laschenkette 2 in einer radial inneren Stellung befindet (die mit dem Bezugszeichen 2a versehen ist), bei der sich eine Übersetzung des Kegelscheibenumschlingungsgetriebes 1 ins Langsame ergibt.

Das von einem nicht näher dargestellten Antriebsmotor bereit gestellte Drehmoment wird in den in Fig. 1 dargestellten antriebsseitigen Teil des Kegelscheibenumschlingungsgetriebes über ein auf der Welle 3 gelagertes Zahnrad 6 eingeleitet, welches auf der Welle 3 über ein Wälzlager in der Form eines axiale und radiale Kräfte aufnehmenden Kugellagers 7 gelagert ist, welches auf der Welle 3 über eine Scheibe 8 und eine Wellenmutter 9 festgelegt wird. Zwischen dem Zahnrad 6 und der axial verlagerbaren Kegelscheibe 5 befindet sich ein Drehmomentfühler 10 angeordnet, dem eine mit einer axial feststehenden Spreizscheibe 11 und einer axial verlagerbaren Spreizscheibe 12 versehene Spreizscheibenkonfiguration 13 zugeordnet ist. Zwischen den beiden Spreizscheiben 11, 12 sind Wälzkörper beispielsweise in der Form der dargestellten Kugeln 14 angeordnet.

Ein über das Zahnrad 6 eingeleitetes Drehmoment führt zur Ausbildung eines Drehwinkels zwischen der axial feststehenden Spreizscheibe 11 und der axial verlagerbaren Spreizscheibe 12, was zu einer axialen Verlagerung der Spreizscheibe 12 führt und zwar aufgrund von an dieser angeordneten Anlauframpen, auf die die Kugeln 14 auflaufen und so für einen axialen Versatz der Spreizscheiben zueinander sorgen.

Der Drehmomentfühler 10 besitzt zwei Druckräume 15, 16, von denen der erste Druckraum 15 für eine Beaufschlagung mit Druckmittel in Abhängigkeit von dem eingeleiteten Drehmoment vorgesehen ist und der zweite Druckraum 16 mit Druckmittel versorgt wird und zwar in Abhängigkeit von der Übersetzung des Getriebes.

Zur Erzeugung der Anpresskraft, mit der die Laschenkette 2 zwischen der axial feststehenden Kegelscheibe 4 und der axial verlagerbaren Kegelscheibe 5 mit einer Normalkraft beaufschlagt wird, ist eine Kolben/Zylindereinheit 17 vorgesehen, die zwei Druckräume 18, 19 besitzt. Der erste Druckraum 18 dient der übersetzungsabhängigen Veränderung der Beaufschlagung der Laschenkette 2 und der zweite Druckraum 19 dient in Verbindung mit dem drehmomentabhängig gesteuerten Druckraum 15 des Drehmomentfühlers 10 zur Erhöhung oder Verringerung der Anpresskraft, mit der die Laschenkette 2 zwischen den Kegelscheiben 4, 5 beaufschlagt wird.

Die Welle 3 besitzt zur Druckmittelversorgung der Druckräume drei Kanäle 20, über die von einer nicht dargestellten Pumpe Druckmittel in die Druckräume eingespeist wird. Über einen auslassseitigen Kanal 21 kann das Druckmittel aus der Welle 3 abfließen und dem Kreislauf wieder zugeführt werden.

Die Beaufschlagung der Druckräume 15, 16, 18, 19 führt zu einer momenten- und übersetzungsabhängigen Verschiebung der axial verlagerbaren Kegelscheibe 5 auf der Welle 3. Die Welle 3 besitzt zur Aufnahme der verlagerbaren Kegelscheibe 5 Zentrierflächen 22, die als Schiebesitz für die verlagerbare Kegelscheibe 5 dienen.

Wie es anhand der Fig. 1 leicht ersichtlich ist, besitzt das Kegelscheibenumschlingungsgetriebe 1 im Bereich der Lagerstellen der Kegelscheibe 5 auf der Welle 3 jeweils eine Geräuschdämpfungseinrichtung 23. Dazu kann die Geräuschdämpfungseinrichtung einen Ringkörper und eine dämpfende Einlage aufweisen oder nur aus einer dämpfenden Einlage bestehen.

Die in Figur 1 verwendeten Bezugszeichen beziehen sich auch auf die im Wesentlichen vergleichbaren Merkmale der weiteren Figuren. Die Figuren sind also insofern als Einheit zu betrachten. Der Übersichtlichkeit halber sind in den weiteren Figuren nur diejenigen Bezugszeichen verwendet, die über diejenigen der Figur 1 hinausgehen.

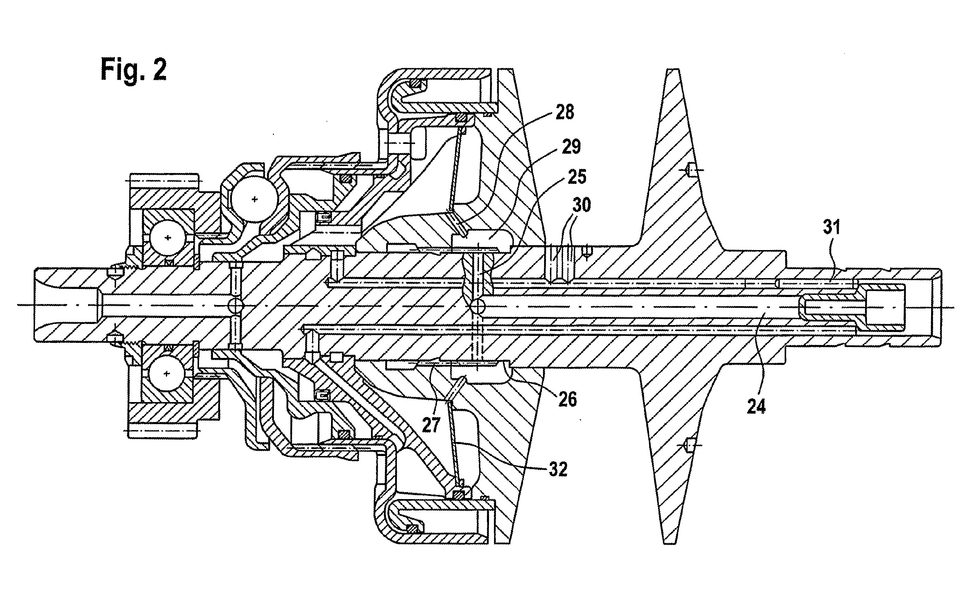

In Figur 2 ist nun der mittlere der drei Kanäle 20 in gegenüber Figur 1 modifizierter Form ausgestaltet. Es ist ersichtlich, dass diese den zentralen Kanal 20 bildende Bohrung 24, die als Sacklochbohrung von der Figur 1 und 2 rechts dargestellten Seite gefertigt wird, deutlich kürzer ausgeführt ist als in Figur 1. Derartige Sacklochbohrungen sind aufwendig in der Herstellung und erfordern einen sehr hohen Genauigkeitsgrad in der Fertigung. Der Herstellungsaufwand sowie die Anforderungen hinsichtlich der Prozesssicherheit steigen dabei überproportional mit der Länge. Die Verkürzung einer derartigen Bohrung wirkt sich also günstig z. B. auf die Herstellkosten aus.

Im Bereich des Grundes dieser Bohrung 24 zweigt die Querbohrung 25 ab, von denen mehrere am Umfang verteilt angeordnet sein können. Im dargestellten Fall ist diese Querbohrung 25 als radiale Bohrung dargestellt; sie kann jedoch auch in einem anderen Winkel als Schrägbohrung gefertigt werden. Die Bohrung 25 durchdringt die Mantelfläche der Welle 3 an einer Stelle, die unabhängig vom Betriebszustand, also z. B. von der eingestellten Übersetzung, in einem Bereich liegt, der stets von der Wegscheibe 5 überdeckt wird.

Durch das Verlegen der Querbohrung 25 in den Überdeckungsbereich der Wegscheibe 5 kann die Welle 3 axial kürzer ausgeführt werden, wodurch Bauraum eingespart werden kann. Außerdem kann sich durch die Verkürzung der Welle 3 auch eine Belastungsreduzierung ergeben.

Die Mündung des Kanals bzw. der Querbohrung 25 kann dabei beispielsweise im Bereich der Ausdrehung 26, der der Zentrierfläche 22 der Welle benachbart ist, angeordnet werden. Dies kann insbesondere vorteilhaft sein, wenn die Verzahnung 27, die die Wegscheibe 5 axial verschiebbar jedoch drehfest mit der Welle 3 verbindet, beispielsweise durch die Drehmomentübertragung hoch beansprucht ist.

In vielen Fällen wird jedoch die Belastung der Verzahnung 27 nicht das kritischste Auslegungskriterium sein, so dass die Mündung der Bohrung 25 in den Bereich dieser Verzahnung gelegt werden kann, wie dies in Figur 2 dargestellt ist. Durch die Anordnung der Querbohrung 25 in der Verzahnung 27 anstatt in der Ausdrehung 26, ergibt sich ein Vorteil dadurch, dass ein größeres Widerstandsmoment vorliegt, wodurch die Biegespannung in der Randfaser verringert wird. Außerdem ist das Flächenträgheitsmoment an dieser Stelle größer, während die kritische Faser die durch die Querbohrung 25 gestört ist, auf etwa gleich bleibendem Radius bleibt. Hierdurch ergibt sich eine deutliche Verringerung der Spannungen im kritischen Bereich um die Mündung der Querbohrung 25 zwischen den Zähnen der Verzahnung 27. Die Versorgung mit Hydraulikfluid ist bei den Figuren 1 und 2 identisch, da die Druckräume 15 und 19 miteinander in Verbindung stehen und die Wegscheibe 5 Verbindungsbohrungen 28 aufweist, die den Bereich der Verzahnung 27 mit dem Druckraum 19 verbinden. In den Figuren ist die Wegscheibe 5 in ihrer äußersten linken Stellung die der Anfahrübersetzung bzw. dem Underdrive entspricht, dargestellt. Wird die Wegscheibe 5 nun nach rechts in Richtung der Festscheibe 4 verschoben, so befindet sich stets ein Teil des Hohlraums bzw. der Kammer 29 über der Mündung der Querbohrung bzw. des Kanal 25, so dass die erforderliche Fluidversorgung ebenso wie in Figur 1 stets gewährleistet ist. Wie auch in Figur 1 gibt es für den Druckraum 16 zwei Schaltzustände, die von der axialen Position der Wegscheibe 5 abhängen. In der dargestellten Stellung sind die Steuerbohrungen 30 freigelegt, so dass der damit in Verbindung stehende, mit einem Stopfen 31 axial verschlossene Kanal 20 und der mit ihm über einen nicht dargestellten Kanal in Verbindung stehende Druckraum 16 drucklos sind bzw. lediglich Umgebungsdruck aufweisen. Wird nun die Wegscheibe 5 auf die Festscheibe 4 zu bewegt, so überfährt sie die Steuerbohrungen 30, wobei ab einem bestimmten Weg die Kammer 29 über den Mündungen der Steuerbohrungen 30 zu liegen kommt. In der Kammer 29 herrscht jedoch ein vom Moment abhängiger hoher Druck, der dann über die Steuerbohrungen 30 und den Kanal 20 auch in die Druckkammer 16 gebracht wird, so dass dort auch hoher Druck anliegt. Auf diese Weise werden zwei Schaltzustände realisiert, die die Anpresskraft übersetzungsabhängig steuern.

Weiterhin ist in Figur 2 eine Tellerfeder 32 vorgesehen, die im drucklosen Zustand des Getriebes 1 die Wegscheibe 5 in eine vorbestimmte axiale Position bringt, wodurch eine Übersetzung des Getriebes 1 eingestellt werden kann, die eine übermäßige Belastung, beispielsweise beim Abschleppen des Fahrzeugs, verhindert.

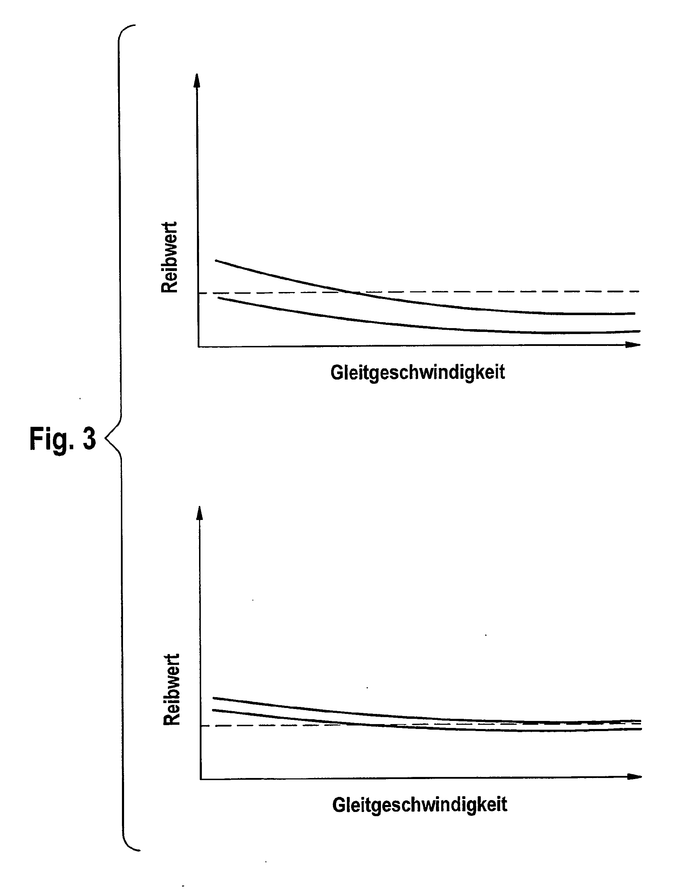

Die Figur 3 zeigt zwei Diagramme, die den Reibwertverlauf über der Gleitgeschwindigkeit abhängig von der Kontaktpressung zeigen. Dabei ist jeweils auf der Abszisse die Gleitgeschwindigkeit und auf der Ordinate der Reibwert dargestellt. Die gestrichelte Linie ist als Bezugswert zu sehen und repräsentiert einen Reibbeiwert, der beispielsweise bei µ = 0,12 liegen kann. Wie aus beiden Figuren zu entnehmen ist, ist der Reibwert eine Funktion der Gleitgeschwindigkeit, wobei dieser mit zunehmender Gleitgeschwindigkeit tendenziell abnimmt.

Wie oben bereits ausgeführt, führt beispielsweise bei Kupplungen ein mit wachsender Gleitgeschwindigkeit fallender Reibwert zu Rupfen und damit zur Komfortminderung. Es ist daher anzustreben, diesen Reibwertabfall über der Geschwindigkeit möglichst gering zu halten.

Der in Figur 3 dargestellte Verlauf tritt an der Kontaktstelle zwischen den Wiegedruckstücken der Kette und den mit ihnen zusammen wirkenden Kontaktflächen der Kegelscheiben auf. Die Kette bzw. das Umschlingungsmittel ist dabei sowohl in Laufrichtung durch das zu übertragende Drehmoment belastet, als auch quer zur Laufrichtung hauptsächlich durch die Anpresskraft. Diese Anpresskraft muss dabei so gewählt werden, dass das zu übertragende Drehmoment mit hinreichender Sicherheit gegen Durchrutschen auf den weiteren Scheibensatz gebracht werden kann.

Der jeweilige Abstand der Kurven in Ordinatenrichtung repräsentiert die Streubreite des Reibwerts in Abhängigkeit von der Anpressung bzw. Kontaktpressung. Dabei steht die untere Linie für niedrige Kontaktpressung und die jeweils obere für eine hohe Kontaktpressung.

Beim Vergleich der bisherigen Ausführungsform gemäß dem oberen Diagramm und der erfindungsgemäßen Ausführungsform gemäß unterem Diagramm fällt auf, dass zunächst der Streubereich, den die jeweils zwei Kurven begrenzen, kleiner ist, woraus sich eine geringere Abhängigkeit des Reibwerts von der gerade anliegenden Kontaktpressung bzw. Anpressung ergibt. Anders ausgedrückt, ist die Ausführungsform gemäß der Erfindung (unteres Diagramm) unempfindlicher gegenüber Kontaktpressungsänderungen.

Weiter ist der Figur 3 zu entnehmen, dass die Kurven im unteren Diagramm flacher verlaufen, woraus sich ergibt, dass die Reibwertabhängigkeit von der Gleitgeschwindigkeit geringer ist. Durch diesen flacheren negativen Gradienten des Reibwertes über der Gleitgeschwindigkeit, wird ein stabileres Verhalten des Reibbeiwerts erreicht. Dabei ist es weniger problematisch, wenn sich die Kurven quasi parallel von oben nach unten oder umgekehrt verschieben, als wenn diese sich in ihrer Neigung ändern würden, da jede Neigungsänderung eine größere Abhängigkeit des Reibwerts von der Gleitgeschwindigkeit repräsentiert.

Ein derartig klar definierter Reibwertverlauf über der Gleitgeschwindigkeit und über der Kontaktpressung, wie im unteren Diagramm der Figur 3 dargestellt, ergibt eine Unterdrückung der Schwingung, die durch den Reibwertverlauf des Stahl-Stahl-Kontaktes zwischen Band bzw. Kette und Kegelscheiben erregt wird. Durch den Einsatz eines entsprechenden Öls mit einem derartigen Reibwertverlauf kann die Schwingung unmittelbar am Ort ihrer Entstehung bekämpft werden.

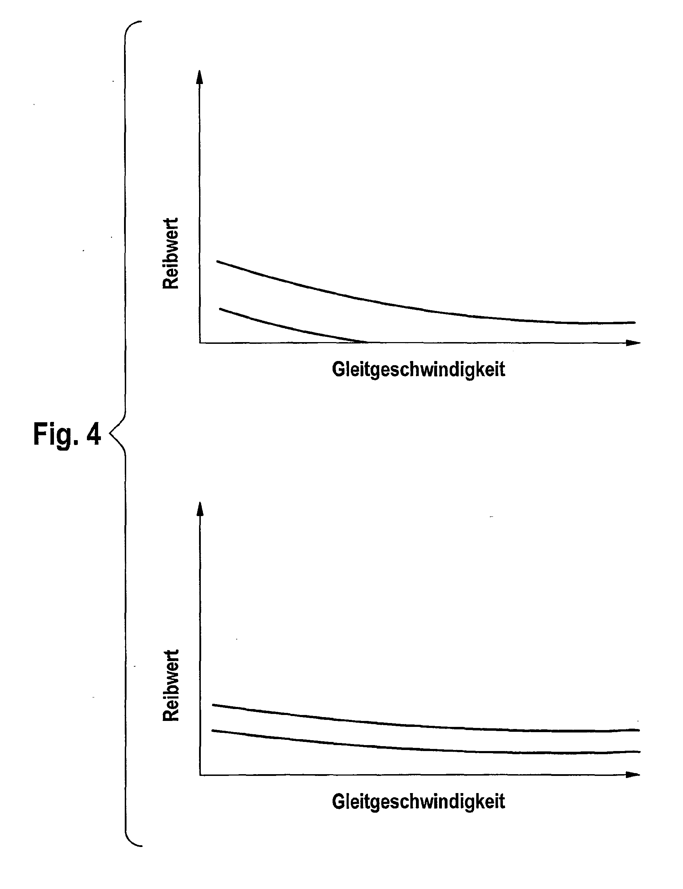

Die Diagramme in Figur 4 sind im Wesentlichen aufgebaut wie diejenigen in Figur 3, zeigen jedoch nicht die Abhängigkeit vom verwendeten Öl, sondern diejenige von den Oberflächenkennwerten. Das in Verbindung mit Figur 3 hinsichtlich Interpretation und Verbesserung Dargelegte gilt auch für Figur 4, d. h. das untere Diagramm dokumentiert eine signifikante Verbesserung der Verhältnisse.

Das obere Diagramm der Figur 4 zeigt die Verhältnisse an einer polierten Oberfläche, während das untere Diagramm der Figur den Reibwert in Abhängigkeit von Gleitgeschwindigkeit und Kontaktpressung bei erfindungsgemäßen Oberflächenkennwerten darstellt. Diese Oberflächenkennwerte sind z. B. durch einen Finishingprozess herstellbar, wobei die Reibparameter den richtigen Verlauf haben und diesen auch über längere Laufzeit behalten. So treten beispielsweise Geräuschphänomene bei glatteren Oberflächen sofort auf, während sie bei raueren Oberflächen später günstigstenfalls nie auftreten. Eine derartige Verbesserung hinsichtlich des Geräuschverhaltens ist auch erzielbar durch die Reduzierung der Anpresskraft bzw. Kontaktpressung.

Untersuchungen mit Simulationen und Messungen zeigten, dass das Schwingverhalten und damit das Geräuschverhalten durch eine erhöhte Kippsteifigkeit der axial beweglichen Scheiben oder Wegscheiben positiv beeinflusst wird, wobei dies insbesondere, jedoch nicht ausschließlich, im Hinblick auf die abtriebsseitige Wegscheibe zutrifft. Generell ergab sich, dass eine erhöhte Biegesteifigkeit, mit der das Aufklaffen der Kegelscheiben, insbesondere des abtriebsseitigen Kegelscheibensatzes, reduziert wird, die hinsichtlich des Geräusches bedeutsame Schwingungsamplitude verringert. Ein vergleichbarer Effekt kann durch eine erhöhte Dämpfung an dieser Stelle erreicht werden.

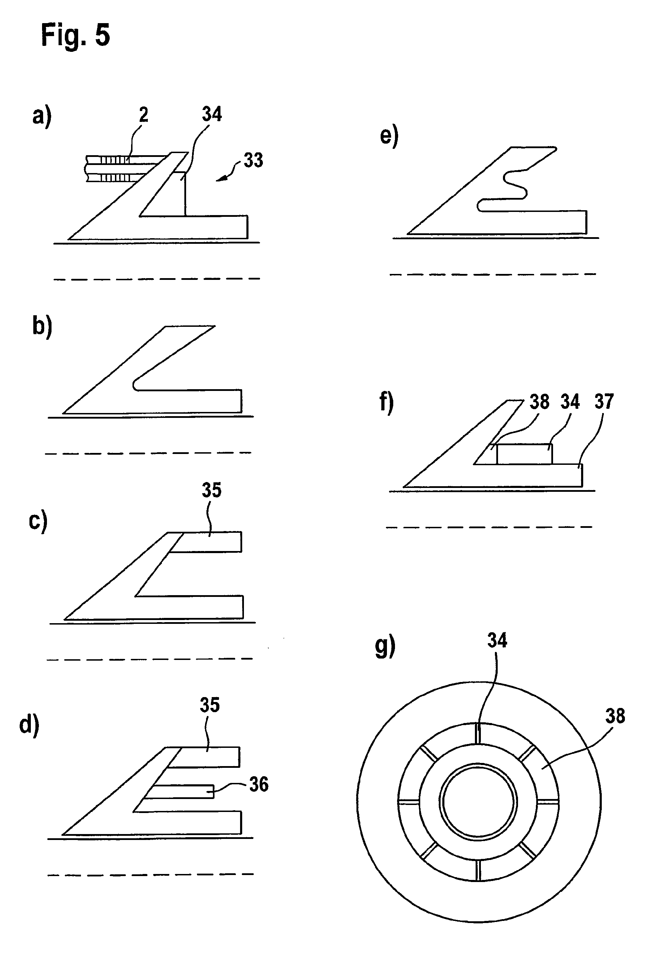

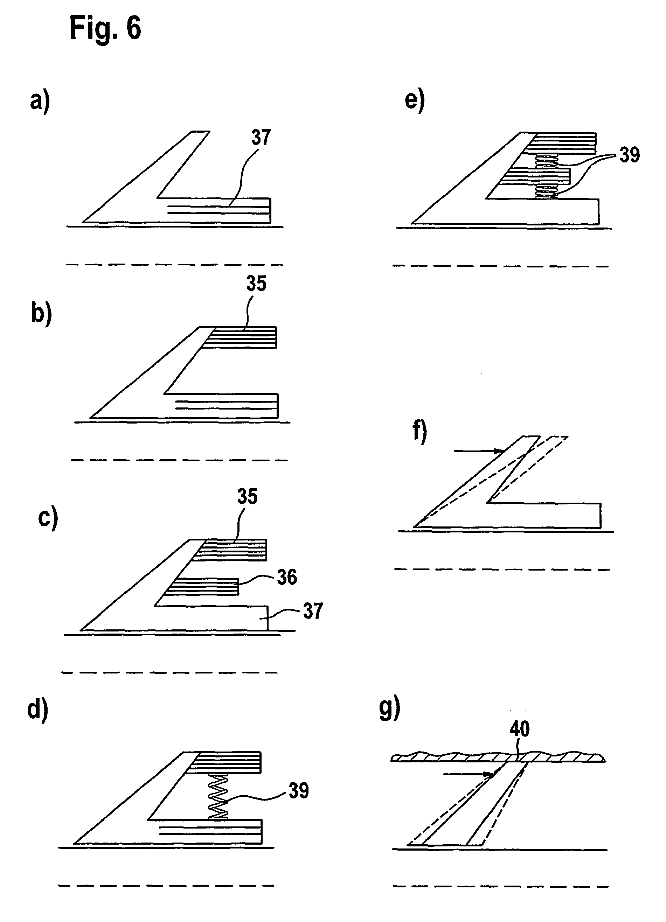

In den Figuren 5 und 6 sind nun schematisch Profile jeweils einer Wegscheibe dargestellt, wobei jeweils nur die obere Hälfte des rotationssymmetrischen Profils gezeigt ist.

Die Figur 5 zeigt in den schematischen Ausführungsbeispielen a) bis e) jeweils eine Versteifung der Scheibe selbst. Dabei ist in den Figuren 5 und 6 schematisch jeweils ein Teil der abtriebsseitigen, axial beweglichen Scheibe bzw. Wegscheibe 33 dargestellt, wobei vergleichbare Gestaltungen auch auf die antriebsseitige Wegscheibe 5 übertragen werden können.

Die in Figur 5a dargestellte Wegscheibe 33 weist in ihrem dem Umschlingungsmittel 2 abgewandten Bereich mehrere über den Umfang verteilt angeordnete Versteifungsrippen 34 auf, die ein Wegdrücken des radial nach außen ragenden Teils der Scheibe 33 unter Axiallast reduzieren oder günstigstenfalls verhindern, wodurch einem Aufklaffen des Scheibenpaares entgegengewirkt wird.

Die Wegscheibe 33 gemäß Figur 5b weist eine Ausgestaltung auf, bei der der radial nach außen ragende Bereich der Wegscheibe 33 derart verstärkt wird, dass dessen Wandstärke nach radial außen hin zunimmt. Dies wird durch eine entsprechende Gestaltung der dem Umschlingungsmittel 2 abgewandten Kontur der Scheibe erreicht. Der hier stetig dargestellte Verlauf dieser Kontur kann auch so abgewandelt werden, dass die Wandstärke in mehreren Stufen zunimmt.

Zur Versteifung der Wegscheibe 33 in axialer Richtung kann auch radial außen ein Versteifungskragen 35 angebracht sein, wie dies in Figur 5c dargestellt ist. Figur 5d zeigt zusätzlich zum radial außen angeordneten Verstreifungskragen 35 einen weiteren Versteifungskragen 36, der radial weiter innen angeordnet ist und somit gegebenenfalls auch als Trennung zwischen zwei Druckkammern dienen kann.

In den Figuren 5c und 5d sind die Versteifungskrägen 35 und 36 als separate Teile bzw. Kreisringe dargestellt, die mit der Wegscheibe 33 zu verbinden sind. Figur 5e zeigt nun eine Möglichkeit, den Versteifungskragen 35 und/oder den Versteifungskragen 36 einstückig mit der Wegscheibe 33 auszuführen, wobei in vorteilhafter Weise eine fertigungsgerechte Gestaltung Berücksichtigung finden kann.

In den Figuren 5f und 5g ist eine Versteifung der Anbindung der Scheibe an die Welle gezeigt. Hier ist zunächst einmal die Nabe 37 der Wegscheibe 33 mit dem nach radial außen ragenden Teil der Wegscheibe 33 über einen Versteifungsring 38 verbunden, so dass eine Verformung dieses Bereiches zumindest vermindert wird. Weiterhin sind wiederum Versteifungsrippen 34 vorgesehen, die einerseits mit dem Versteifungsring 38 und andererseits mit der Nabe 37 der Wegscheibe 33 verbunden sind.

In den Figuren 6a bis 6e sind prinzipielle Dämpfungsmöglichkeiten für die abtriebsseitige, axial bewegliche Scheibe oder Wegscheibe 33 dargestellt, die jedoch auch auf die antriebsseitige, axial bewegliche Scheibe oder Wegscheibe 5 anwendbar sind.

Figur 6a zeigt zunächst eine Unterteilung der Nabe 37 in einzelne Lamellen, wobei dieses Lamellenpaket durch den Anpressdruck, der über das hydraulische Medium aufgebracht wird, zusammengepresst wird und somit eine Dämpfung bewirkt.

In Figur 6b ist zusätzlich der Versteifungskragen 35 als Lamellenpaket ausgeführt, das wiederum durch den Anpressdruck zusammengepresst wird. Gemäß Figur 6c kann auch der radial weiter innen liegende Versteifungskragen 36 als Lamellenpaket ausgeführt sein, wobei dieser Versteifungskragen 36 wiederum als Trennung zwischen unterschiedlichen Druckkammern herangezogen werden kann. Alternativ kann bei einer Ausführungsform gemäß Figur 6c auch die Nabe 37 wieder in einzelne Lamellen unterteilt sein.

In den Figuren 6d und 6e sind jeweils Federn 39 gezeigt, die durch zusätzliche radiale Anpressung die Reibung zwischen den einzelnen Lamellenzylindern erhöhen, wodurch gleichzeitig die Dämpfungswirkung gesteigert wird. Auch in Figur 6e wäre es möglich, die Nabe 37 als Lamellenpaket auszuführen.

In den Figuren 6f und 6g ist ein anderer Lösungsansatz gezeigt, der darin besteht, die Richtung des Verkippens der Wegscheibe zu verändern. Bei der üblichen Führung der Wegscheibe über ihren radial inneren Bereich bzw. über ihre Nabe 37 zeigt der radial äußere Bereich dieser Wegscheibe die größte Auslenkung in Kipprichtung. Um diesem zu begegnen, ist es prinzipiell möglich, die Wegscheibe außen zu führen, so dass diese mit radial äußeren Bereichen an der Außenführung 40 anliegt und somit dort nicht ausweichen kann. Ein Verkippen würde dann im radial inneren Bereich der Wegscheibe 33 anliegen, wogegen wieder Maßnahmen wie beschrieben ergriffen werden könnten. Dabei ist jedoch zu beachten, dass ein Verkanten bzw. Verspannen der Wegscheibe 33 zwischen den Führungen vermieden wird.

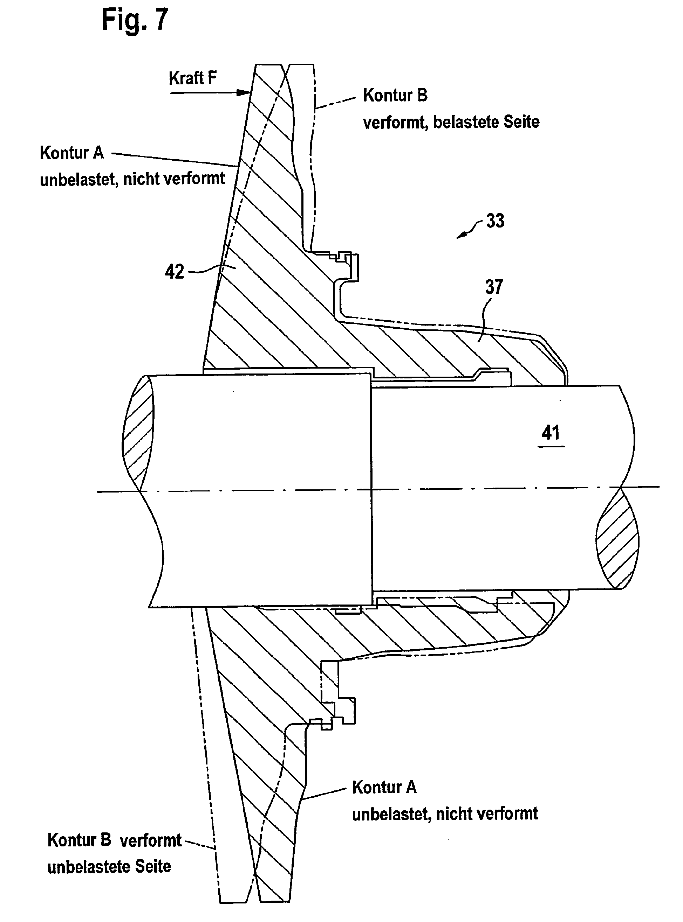

In Figur 7 ist schematisch die abtriebsseitige Wegscheibe 33 dargestellt, wobei an der antriebsseitigen Wegscheibe 5 vergleichbare Effekte auftreten. Die bezüglich der abtriebsseitigen Wegscheibe 33 getroffenen Aussagen gelten somit auch für die antriebsseitige Wegscheibe 5; der Übersichtlichkeit halber werden die Vorgänge und Merkmale nachfolgend lediglich anhand der Wegscheibe 33 beschrieben.

Die Wegscheibe 33 besteht aus zwei Hauptbereichen, nämlich aus dem Kegelscheibenteller 42 und dem Kegelscheibenhals bzw. der Nabe 37. Die Wegscheibe 33 ist drehfest, jedoch axial verschiebbar auf der abtriebsseitigen Welle 41 gelagert und überträgt so das vom Umschlingungsmittel 2 eingebrachte Drehmoment auf den Abtrieb, also beispielsweise über ein Differentialgetriebe und daran angeflanschte Antriebswellen, letztlich auf die Antriebsräder des Kraftfahrzeugs.

In Figur 7 sind unmaßstäblich zwei Konturen der Wegscheibe 33 dargestellt, nämlich die Kontur A, die den nicht verformten, unbelasteten Zustand darstellt, und andererseits die Kontur B, die den unter der Einwirkung der Kraft F sich ergebenden, verformten Zustand repräsentiert. Hierzu ist festzustellen, dass der unbelastete, nicht verformte Zustand gemäß Kontur A, wie sich aus der Skizze ergibt, rotationssymmetrisch ist.

Die durch den oben radial außen angeordneten Pfeil dargestellte Kraft F ist die Reaktionskraft des Umschlingungsmittels auf die oben beschriebene Summe der Anpresskräfte zur Drehmomentübertragung und Übersetzungsverstellung des Getriebes. Im Angriffspunkt der dargestellten Kraft F sowie entlang eines bogenförmigen Segments, das sich über Teile des Umfangs der Wegscheibe 33 erstreckt, liegt also das Umschlingungsmittel 2 an, während auf der gegenüber liegenden Seite (unten dargestellt) das Umschlingungsmittel 2 von der Wegscheibe 33 nicht berührt wird, da das Umschlingungsmittel 2 sich in Richtung auf den komplementären Scheibensatz zu erstreckt.

Wie sich aus Figur 7 ergibt, resultiert die Konturänderung von Kontur A nach Kontur B nicht nur aus einer Verformung des Kegelscheibentellers 42, sondern auch aus einem Verkippen der gesamten Kegelscheibe 33. Würde lediglich eine Verformung des Kegelscheibentellers 42 auftreten, wären Kontur A und Kontur B auf der unten dargestellten, unbelasteten Seite praktisch identisch.

Aus der Darstellung ergibt sich jedoch, dass auf der belasteten Seite die verformte Kontur B in Richtung der auf sie einwirkenden Kraft F ausgelenkt wird (in der Figur nach rechts), während sie auf der unbelasteten Seite in die der Kraft F entgegen gerichtete Richtung (in Figur 7 nach links) ausgelenkt wird.

Diese Auslenkung resultiert aus dem Verkippen der gesamten Wegscheibe 33, da zum einen der Kegelscheibenhals bzw. die Nabe 37 ebenfalls nur eine begrenzte Steifigkeit aufweist und zum anderen durch die axiale Verschiebbarkeit der Kegelscheibe bzw. Wegscheibe 33 diese nicht auf ihrer gesamten, mit der Welle 41 zusammenwirkenden Länge geführt werden kann. Außerdem ist für die axiale Bewegbarkeit ein gewisses Führungsspiel zwischen der Nabe 37 und der Welle 41 erforderlich, das jedoch andererseits ein Verkippen der Wegscheibe 33 fördert. Dabei ist das Verkippen umso ausgeprägter, je größer das Spiel ausgeführt wird.

Sowohl die Verformung als auch das Verkippen ergibt sich aus dem aus der Kraft F resultierenden, bezüglich der jeweiligen Kegelscheibe umlaufenden Biegemoment, das sich (bei gleich bleibender Kraft) mit zunehmendem Radius, auf dem das Umschlingungsmittel 2 läuft, erhöht.

Durch dieses Verkippen und die ungleichmäßige Verformung der Wegscheibe 33 sowie die ungleichmäßige Lastaufteilung innerhalb des Umschlingungsmittels 2 wird dem Umschlingungsmittel 2 beim Durchlauf der Umschlingung auf der Kegelscheibe eine radiale Bewegung aufgezwungen, wobei sich die Kette bzw. das Umschlingungsmittel 2 radial nach innen in Richtung der Welle 41 bewegt. Abhängig von Last und Verformungen steigen die Reibkräfte und Reibwege, die hierbei entstehen, stark an. Hierdurch ergibt sich ein schlechterer Wirkungsgrad sowie ein erhöhter Verschleiß an den zusammenwirkenden Oberflächen. Weiterhin wurde festgestellt, dass dies ein Anregungsmechanismus für Reibschwingungen ist, die wiederum durch Körperschallanregungen Geräusche erzeugen können.

In den Figuren 8a und 8b ist jeweils der Variator 43 dargestellt mit dem antriebsseitigen Kegelscheibensatz 44 und dem abtriebsseitigen Kegelscheibensatz 45, wobei in Figur 8b ein gegenüber einem Variator 43 gemäß Figur 8a steifigkeitsoptimierter Variator 43 dargestellt ist.

Der antriebsseitige Kegelscheibensatz 44 weist jeweils eine Festscheibe 4 und eine Wegscheibe 5 auf, die über ein Umschlingungsmittel in Form einer Laschenkette 2 mit der jeweiligen Wegscheibe 33 und Festscheibe 46 des abtriebsseitigen Scheibensatzes 45 verbunden sind.

Die in den Figuren 8a und 8b verwendeten Bezugszeichen 47 bis 56 haben folgende Bedeutung:
- 47 -: antriebsseitiger Wegscheibenhalsdurchmesser
- 48 -: abtriebsseitiger Wegscheibenhalsdurchmesser
- 49 -: antriebsseitige Wegscheibentellerbreite
- 50 -: antriebsseitige Festscheibentellerbreite
- 51 -: abtriebsseitige Festscheibentellerbreite
- 52 -: abtriebsseitige Wegscheibentellerbreite
- 53 -: Länge des antriebsseitigen, kleinen Schiebesitzes
- 54 -: Länge des antriebsseitigen, großen Schiebesitzes
- 55 -: Länge des abtriebsseitigen, großen Schiebesitzes
- 56 -: Länge des abtriebsseitigen, kleinen Schiebesitzes.

Bei dem Variator 43 gemäß Figur 8a sind die antriebsseitigen und abtriebsseitigen Wegscheibenhalsdurchmesser 47 und 48 praktisch gleich ausgeführt, weisen also vergleichbare Durchmesser und somit vergleichbare Festigkeit auf. Weiterhin ist festzustellen, dass die antriebsseitigen und abtriebsseitigen Wegscheiben- und Festscheibentellerbreiten 49, 50, 51 und 52 etwa vergleichbar groß ausfallen, so dass die geometrische Ausgestaltung der jeweiligen Kegelscheiben 4, 5, 33 und 46 und damit auch deren Festigkeit in vergleichbarer Größenordnung liegt. Auch die an- und abtriebsseitigen großen und kleinen Schiebesitze 53, 54, 55 und 56 sind in ihrer Länge vergleichbar ausgeführt, so dass auch diesbezüglich geometrisch vergleichbare Verhältnisse herrschen, insbesondere was die Abstützung der jeweiligen Wegscheibe auf der mit ihr verbundenen Welle betrifft.

Hiervon abweichend ist der steifigkeitsoptimierte Variator 43 gemäß Figur 8b gestaltet. Der abtriebsseitige Wegscheibenhalsdurchmesser 48 ist deutlich größer ausgeführt als der antriebsseitige Wegscheibenhalsdurchmesser 47, wobei der abtriebsseitige Wegscheibenhalsdurchmesser gleichzeitig als Führungsdurchmesser für die auf ihm angeordnete Druckfeder 57 ausgeführt ist. Die Druckfeder 57 ist in Figur 8b zylindrisch dargestellt, während sie gemäß Figur 8a auch tailliert ausgeführt sein kann. Eine kegelige Ausgestaltung der Druckfeder 57 ist ebenfalls möglich.

Aus dem vergrößerten abtriebsseitigen Wegscheibenhalsdurchmesser 48 ergibt sich eine erhöhte Steifigkeit der abtriebsseitigen Wegscheibe 33, da dadurch ein erhöhtes Widerstandsmoment gegen Biegung erreicht wird.

Weiterhin ergibt sich aus der Darstellung gemäß 8b, dass der abtriebsseitige Kegelscheibensatz 45 deutlich steifer ausgeführt ist, als der antriebsseitige Kegelscheibensatz 44. Ein Vergleich zeigt, dass die abtriebsseitige Festscheibentellerbreite 51 größer ist als die antriebsseitige Festscheibentellerbreite 50. Weiterhin ist die abtriebsseitige Wegscheibentellerbreite 52 erheblich größer als die antriebsseitige Wegscheibentellerbreite 49. Auch die jeweilige abtriebsseitige Schiebesitzlänge des großen und des kleinen Schiebesitzes 55 und 56 liegt erheblich über der Länge der entsprechenden Schiebesitze des antriebsseitigen Scheibensatzes 44, die mit den Bezugsziffern 53 und 54 versehen sind.

Hieraus ergibt sich eine erhöhte Steifigkeit des abtriebsseitigen Scheibensatzes 45 gegenüber dem antriebsseitigen Scheibensatz 44, zum einen aus der Festigkeit der Kegelscheiben 33 und 46, aufgrund deren üppigerer Dimensionierung. Zum anderen ergibt sich aufgrund der besseren Abstützung über die gesteigerten Schiebesitzlängen 55 und 56 eine bessere Absicherung gegenüber dem Verkippen unter Belastung durch das Zugmittel 2.

Zur weiteren Erhöhung der Kippsteifigkeit kann das Spiel, mit dem die Wegscheibe 33 auf den Schiebesitzen 55, 56 auf der Welle axial verlagerbar, jedoch drehfest, gelagert ist, minimiert werden, um somit ebenfalls einer Kipptendenz der Wegscheibe 33 entgegen zu wirken.

Zusammengefasst dienen folgende Gestaltungen zur Steifigkeitsoptimierung des Variators 43:
- abtriebsseitiger Scheibensatz 45 wird durch die Geometrie der Kegelscheiben 33 und 46 gegenüber dem antriebsseitigen Kegelscheibensatz 44 verstärkt,
- die Wegscheiben 33 und 5 werden gegenüber den Festscheiben 4 und 46 verstärkt,
- die Schiebesitzlängen 55 und 56 werden abtriebsseitig gegenüber den antriebsseitigen Schiebesitzlängen 54 und 53 vergrößert,
- der abtriebsseitige Wegscheibenhaltsdurchmesser 48 wird gegenüber dem antriebsseitigen Wegscheibenhalsdurchmesser 47 vergrößert,
- Ausgestaltung des abtriebsseitigen großen Schiebesitzes 55 der Wegscheibe 33 so, dass er in Underdrive-Position (bei radial außen laufendem Umschlingungsmittel 2) eine möglichst große Führungslänge aufweist.

Prinzipiell wäre es zwar möglich, den gesamten Variator 43 entsprechend zu modifizieren, also mit massiveren Kegelscheiben und vergrößerten Schiebesitzlängen etc. zu versehen, jedoch werden z. B. durch den zur Verfügung stehenden Bauraum und das Gewicht des Getriebes Grenzen gesetzt.

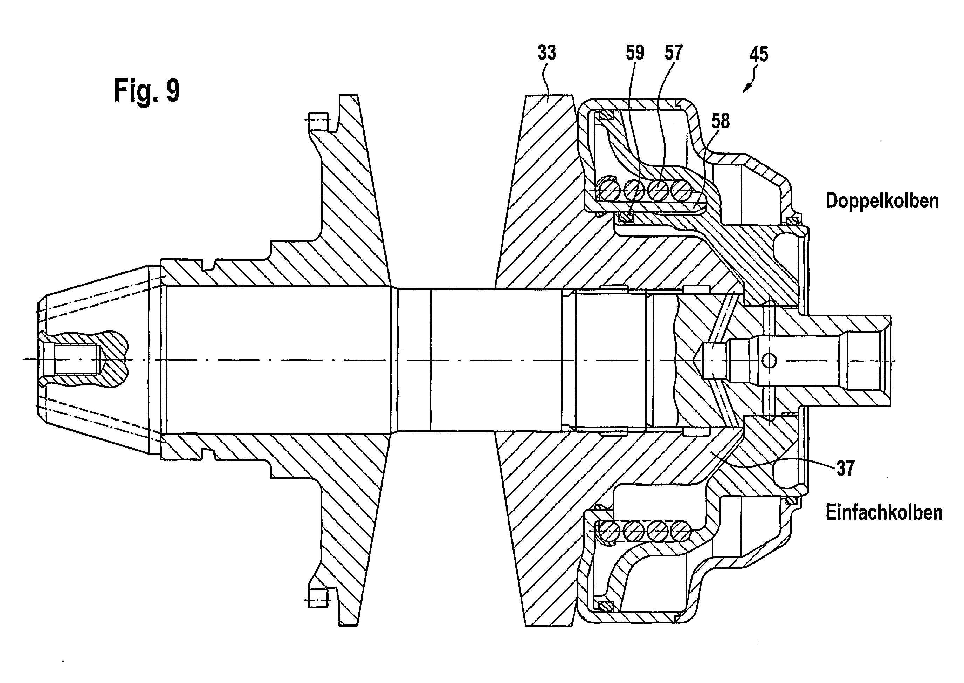

Figur 9 zeigt zwei Ausgestaltungsmöglichkeiten des abtriebsseitigen Kegelscheibensatzes 45, wobei in der unteren Hälfte ein nach dem Einfachkolbenprinzip aufgebauter Scheibensatz dargestellt ist, während in der oberen Hälfte ein nach dem Doppelkolbenprinzip aufgebauter Scheibensatz dargestellt ist, wie er beispielsweise in der DE 103 54 720.7 beschrieben ist.

Beim Doppelkolbenprinzip stehen für die Anpressung und die Verstellung getrennte Kolben zur Verfügung, während beim Einfachkolbenprinzip lediglich eine Kolben-/Zylinder-Einheit die entsprechende Kraft in den Scheibensatz einleitet.

Der grundlegende Aufbau des Scheibensatzes 45 gemäß Figur 9 ist wie bisher insbesondere in Zusammenhang mit Figur 8b beschrieben. Für die Ausgestaltung hinsichtlich der Festigkeitsoptimierung gilt das bereits oben Angeführte.

Gegenüber den bisher beschriebenen Ausführungsformen weist hier die Druckfeder 57 einen größeren Durchmesser auf, wodurch ihr Angriffspunkt an der Wegscheibe 33 radial weiter außen zu liegen kommt. Aus dieser Anordnung ergibt sich unter anderem der Vorteil, dass mehr Bauraum zur Verfügung steht, um den Kegelscheibenhals bzw. die Nabe 37 aufzudicken bzw. geometrisch stärker auszubilden und im Durchmesser zu vergrößern. Der hieraus sich ergebende Festigkeitsgewinn ist bereits oben beschrieben. Beim in Figur 9 oben dargestellten Doppelkolbenprinzip ergibt sich hieraus eine geänderte Anordnung der Druckfeder 57 dahingehend, dass diese vom radial inneren Druckraum in den radial äußeren Druckraum verschoben wird. Das die Druckfeder 57 radial innen stützende Blechteil 58 ist fest mit der Wegscheibe 33 verbunden und dient mit seiner der Feder 57 abgewandten Seite als Dichtungslaufbahn für die Dichtung 59. Diese Dichtungslaufbahn kann jedoch auch, wie beispielsweise in Zusammenhang mit Figur 8 dargestellt, einstückig mit der Wegscheibe 33 ausgebildet sein. Dieses einstückig mit der Wegscheibe 33 ausgebildete Teil würde dann wiederum mit seinem radial äußeren Bereich die Druckfeder 57 radial innen haltern. Bei innenliegender Druckfeder 57 kann dieses Teil radial innen und außen jeweils eine Dichtungslaufbahn bilden.

Figur 10 zeigt weitere Ausgestaltungsmöglichkeiten des abtriebsseitigen Kegelscheibensatzes 45, auf den insbesondere hinsichtlich der Steifigkeitsoptimierung das bisher Beschriebene ebenfalls zutrifft. Die abtriebsseitige Wegscheibe 33 ist, wie bisher beschrieben, zunächst über zwei Schiebesitze 55 und 56 auf der Welle 41 abgestützt. Gegenüber den bisher gezeigten Ausführungsformen ist die Fliehölhaube 60 deutlich verstärkt und massiver ausgeführt, so dass die Wegscheibe 33 zusätzlich über den Schiebesitz 62 auf dem Flanschteil 61 abgestützt ist. Sollte eine Abdichtung im Bereich dieses Schiebesitzes 62 erforderlich sein, so kann dies durch die Dichtung 63 (Figur 10 oben) erfolgen. Somit weist die Wegscheibe 33 drei Schiebesitze 55, 56 und 62 auf, über die sie gegenüber der Welle abgestützt ist. Eine derartige Abstützung weist eine weit erhöhte Steifigkeit auf, so dass auch eine derartige Ausgestaltung zur Lösung der der Erfindung zugrunde liegenden Aufgabe beiträgt.

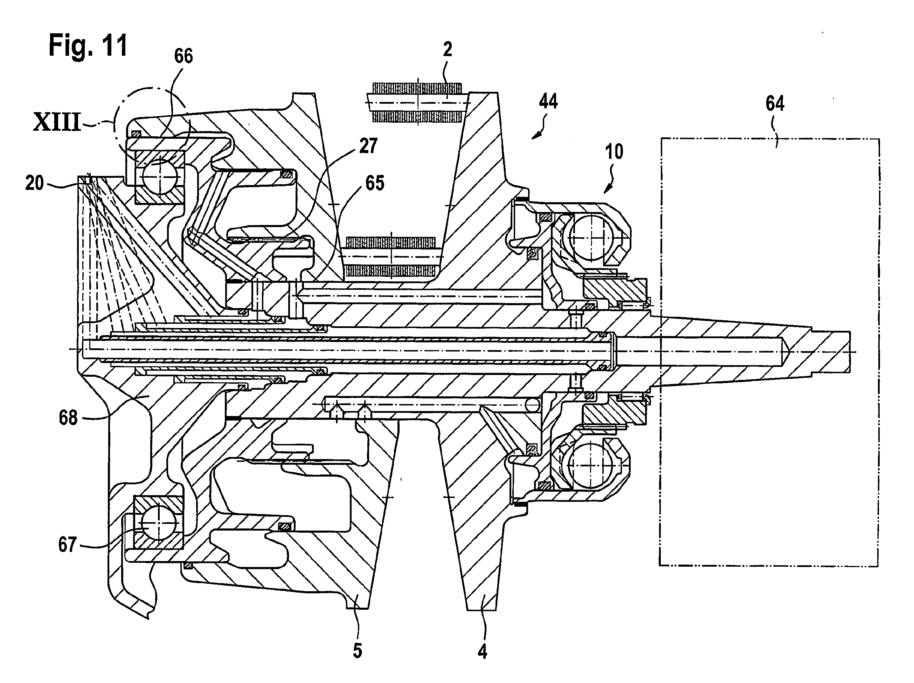

Figur 11 zeigt schematisch einen antriebsseitigen Kegelscheibensatz 44 mit einem schematisch durch eine strichpunktierte Linie dargestellten Anfahrelement 64, dem Drehmomentfühler 10 und dem Umschlingungsmittel in Form der Laschenkette 2. Die radiale Position der Laschenkette 2 ist dabei abhängig von der Größe des Keilspaltes, der übersetzungsabhängig zwischen der Festscheibe 4 und der Wegscheibe 5 vergrößert oder verkleinert wird dadurch, dass die Wegscheibe 5 von der Festscheibe 4 weg oder axial darauf zu bewegt wird. In der oberen Hälfte ist dabei diejenige Position der Wegscheibe 5 dargestellt, die die größtmögliche Übersetzung des Getriebes ins Langsame (Underdrive) bewirkt. Hierzu ist der Abstand zwischen Festscheibe 4 und Wegscheibe 5 maximal, das heißt die Wegscheibe 5 ist in ihrer in Figur 11 äußerst linken Position. Dagegen ist in der unteren Hälfte die maximale Übersetzung ins Schnelle (Overdrive) dargestellt, bei der zwischen Festscheibe 4 und Wegscheibe 5 der Abstand minimal ist, so dass die Laschenkette 2 auf möglichst großem Durchmesser läuft. Hierzu ist die Wegscheibe 5 in ihrer äußerst rechten Position dargestellt.

Die Wegscheibe 5 ist gegenüber der Festscheibe 4 drehfest, jedoch axial beweglich aufgenommen. Diese Aufnahme erfolgt einerseits durch die Verzahnung 27 und andererseits durch die beiden Schiebesitze 65 und 66, wobei der erste Schiebesitz 65 radial innen angeordnet ist, während der zweite Schiebesitz 66 im radial äußeren Bereich der Wegscheibe 5 radial außerhalb der Lagerung 67 realisiert ist.

Ein Vergleich, insbesondere mit Figur 8a, zeigt, dass sich durch die Verlegung des zweiten Schiebesitzes 66 nach radial außen, wie in Figur 11 gezeigt, radial innen und damit insgesamt axialer Bauraum einsparen lässt. In diesem Bauraum kann beispielsweise ein Teil des Gehäuseunterbaus 68 angeordnet werden, in dem Kanäle 20 untergebracht werden können, die zur Fluidversorgung beispielsweise für die übersetzungsabhängige Einstellung des Scheibensatzes 44 dienen. Ein weiterer Vorteil der Anordnung des zweiten Schiebesitzes 66 radial außen besteht darin, dass die Wegscheibe 5 besser gegen Verkippen abgestützt werden kann, wodurch sich die Steifigkeit des Scheibensatzes erhöht und die gegebenenfalls daraus resultierenden Nachteile vermieden oder zumindest vermindert werden können, wie dies bereits im Vorhergehenden beschrieben ist.

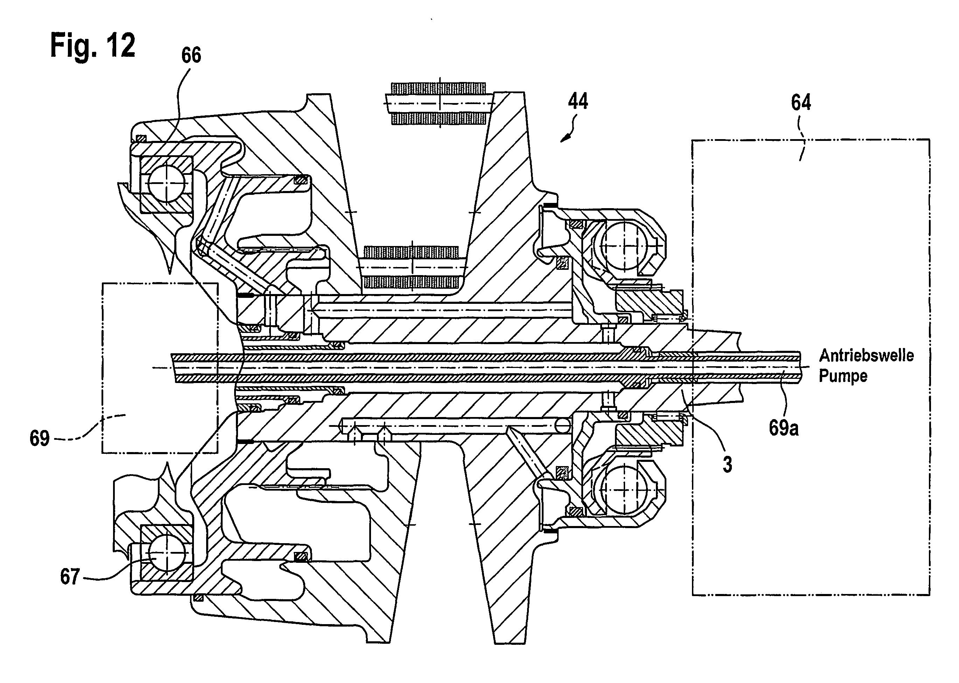

In Figur 12 ist schematisch dargestellt, wie in dem Bereich radial innerhalb des Schiebesitzes 66 und der Lagerung 67 eine durch die strichpunktierte Linie angedeutete Hydraulikpumpe 69 angeordnet werden kann. Die Hydraulikpumpe 69 dient wiederum zur Bereitstellung des unter Druck stehenden hydraulischen Mediums zur Verstellung und Anpressung der Kegelscheibensätze. Die Hydraulikpumpe 69 wird hierfür über eine Antriebswelle 69a angetrieben, die ihrerseits im Bereich des Anfahrelements 64 angetrieben wird und koaxial in der Welle 3 des Kegelscheibensatzes 44 angeordnet sein kann.

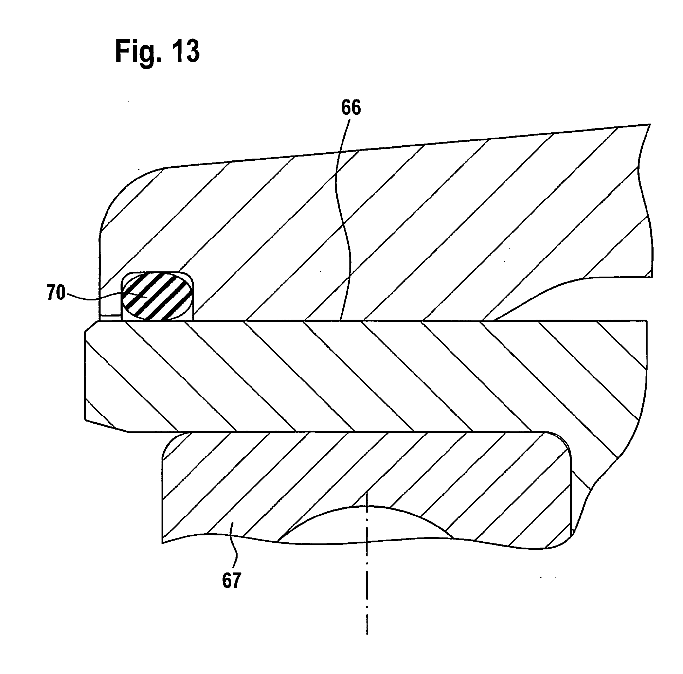

Figur 13 zeigt den Ausschnitt gemäß XIII in Figur 11 in vergrößerter Darstellung. Wie sich aus der Zusammenschau der Figuren 11 bis 13 ergibt, ist die Länge des Schiebesitzes 66 aufgrund dessen Anordnung radial außen nicht bauraumbestimmend, so dass es möglich ist, trotz großer tragender Länge des Schiebesitzes 66, die Dichtung 70 dem eigentlichen Schiebesitz 66 axial benachbart bzw. in axialer Verlängerung des Schiebesitzes 66 anzubringen, ohne die Länge des Schiebesitzes 66 entscheidend zu verkürzen. Die relativ große Länge des Schiebesitzes 66 wirkt sich wiederum günstig beispielsweise auf die Steifigkeitseigenschaften der Wegscheibe und somit des gesamten Variators aus. Die Dichtung 70 ist erforderlich, da zum einen der Schiebesitz 66 ein gewisses Spiel aufweisen muss, um die axiale Verlagerbarkeit zu gewährleisten, und zum anderen auf der der Dichtung 70 abgewandten Seite des Schiebesitzes 66 ein Hydraulikdruck herrscht, der aus der Verstellung und Anpressung der Kegelscheibe herrührt, während auf der dem Schiebesitz 66 abgewandten Seite der Dichtung 70 praktisch Umgebungsdruck herrscht, woraus ein starkes Druckgefälle resultiert.

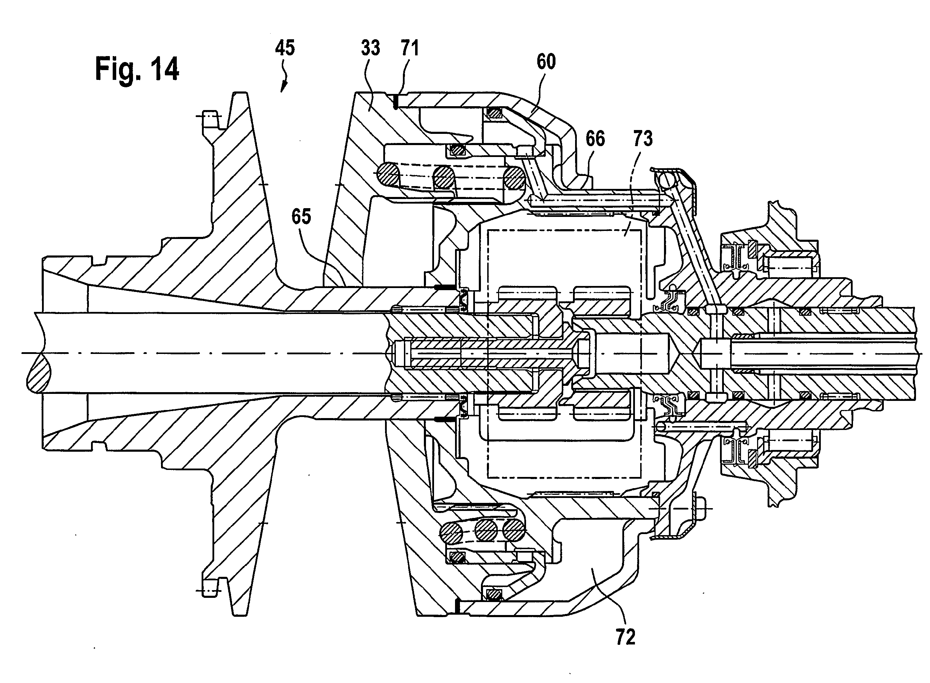

In Figur 14 ist ein abtriebsseitiger Kegelscheibensatz 45 dargestellt, der wiederum einen radial innen liegenden Schiebesitz 65 und einen zweiten, radial außen angeordneten Schiebesitz 66 aufweist. Der zweite Schiebesitz 66 wird dabei unter Heranziehung der Fliehölhaube 60 gebildet, die sich einerseits über den Schiebesitz 66 am Unterbau abstützt und andererseits mittels der Schweißnaht 71 mit der abtriebsseitigen Wegscheibe 33 verbunden ist. Das in der Fliehölkammer 72 befindliche Öl bewirkt eine drehzahlabhängige Fliehölkompensation. Im Bereich radial innerhalb des Schiebesitzes 66, der durch die Verlagerung des Schiebesitzes 66 nach radial außen gebildet wird, kann beispielsweise ein Verteilergetriebe 73 einer Allradanordnung untergebracht werden, das in Figur 14 schematisch durch die strichpunktierte Linie dargestellt ist. Das in das Verteilergetriebe 73 eingeleitete Drehmoment wird durch dieses auf zwei Abtriebswellen aufgeteilt, von denen beispielsweise eine die Vorderräder, und die andere die Hinterräder des Fahrzeugs antreiben kann.

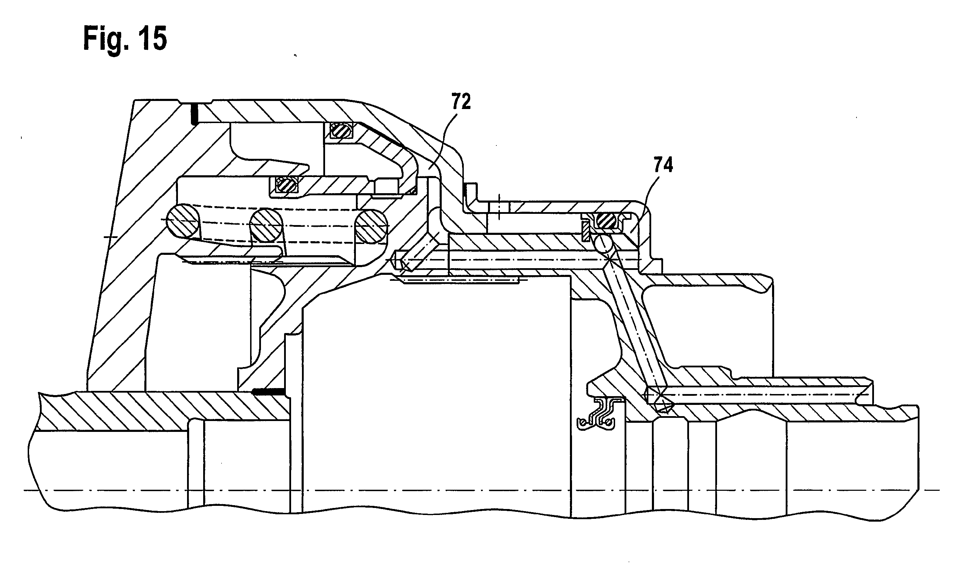

Die in Figur 15 dargestellte Ausführungsform entspricht im Wesentlichen der gemäß Figur 14, wobei hier zur weiteren drehzahlabhängigen Fliehölkompensation zusätzlich zur Fliehölkammer 72 eine weitere Fliehölkammer 74 ausgebildet ist.

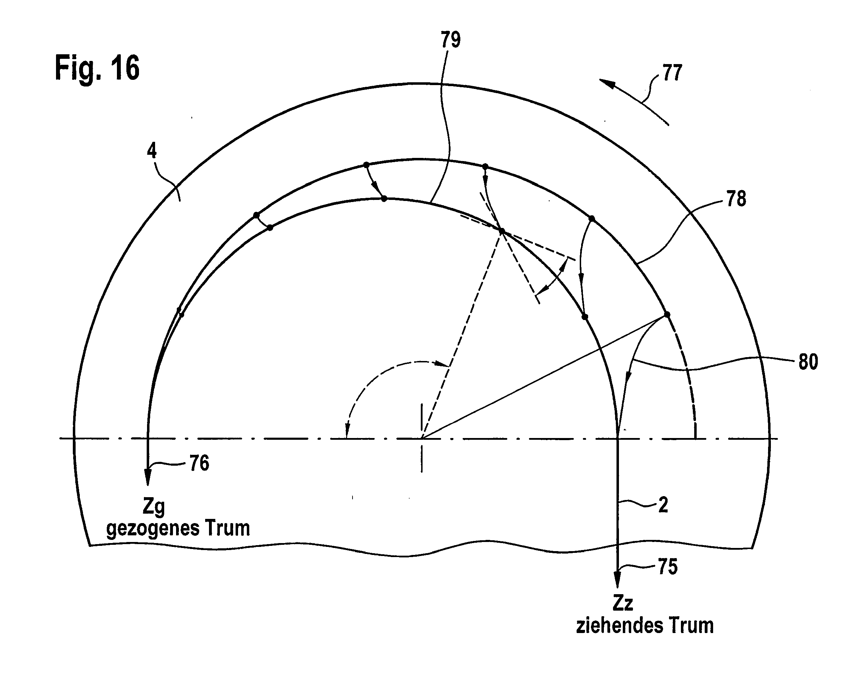

Figur 16 zeigt die Draufsicht in axialer Richtung auf die gewölbte oder kegelige Fläche der antriebsseitigen Festscheibe 4 und darauf schematisch dargestellt das Umschlingungsmittel 2 in Form einer Laschenkette bzw. deren Laufspur auf der Festscheibe 4. Aus der Zuordnung des Zugtrums 75 und des Leertrums 76 zur Festscheibe 4 ergibt sich, dass sich diese in der Darstellung gemäß Figur 16 für den Fall, dass sie vom Motor angetrieben wird, also im Zugbetrieb, entgegen dem Uhrzeigersinn in Richtung des Pfeiles 77 bewegt. Diese Bewegungsrichtung entspricht wie dargelegt der Drehrichtung im Betrieb. Wie sich aus der Darstellung ergibt, liegt die Laufspur der Laschenkette 2 auf der Festscheibe 4 nicht auf der Kreisbahn 78, sondern auf der Spiralbahn 79. Durch die auf das Zugtrum 75 wirkende Zugkraft wird die Laschenkette 2 auf eine radial weiter innen liegende Bahn gezogen, wobei sich dann, wie oben dargestellt und beschrieben, der Keilspalt zwischen den Kegelscheiben vergrößert.

Aufgrund des Lastaufbaus bzw. Kraftaufbaus in der Kette 2 wird diese nicht gleichmäßig nach innen gezogen, so dass sich eine radial weiter innen liegende Kreisbahn einstellen würde, sondern in Zugrichtung des Zugtrums wachsend, so dass sich die dargestellte Spiralbahn 79 ergibt. Die Bewegungsrichtung 80 eines Kettengliedes zwischen der Kreisbahn 78 und der Spiralbahn 79 verläuft dabei nicht gerade, sondern, wie dargestellt, in einer Kurve, wobei der zurückzulegende Weg mit zunehmender Nähe zum einlaufenden Zugtrum 75 zunimmt. Dies bedeutet, dass die Relativbewegung zwischen der Kette 2 und der Scheibe 4 zunimmt, wodurch der Reibweg stark ansteigt, was wiederum, wie bereits beschrieben, Geräusche verursachen kann.

Zusätzlich zu diesem spiraligen Lauf, der mit der Spiralbahn 79 dargestellt ist, hat die Kette 2 das Bestreben, in Zugrichtung des Zugtrums, also praktisch in Umfangsrichtung der Kegelscheibe 4, entgegen deren Drehrichtung 77 im Betrieb zu rutschen bzw. zu gleiten. Auch dies kann beispielsweise zu Geräuschproblemen führen.

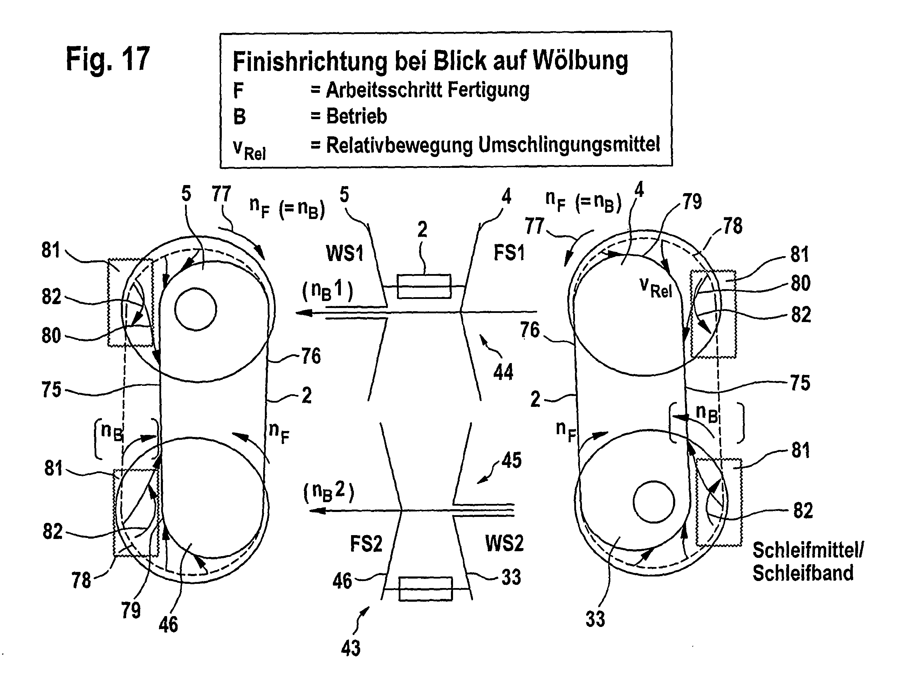

In Figur 17 ist schematisch der Variator 43 eines erfindungsgemäßen Kegelscheibenumschlingungsgetriebes dargestellt, dessen antriebsseitiger Kegelscheibensatz 44 über das Umschlingungsmittel bzw. die Laschenkette 2 mit dem abtriebsseitigen Scheibensatz 45 zur Drehmomentübertragung verbunden ist. Der antriebsseitige Kegelscheibensatz 44 weist die Festscheibe 4 und die Wegscheibe 5 auf, während der abtriebsseitige Kegelscheibensatz die Festscheibe 46 und die Wegscheibe 33 umfasst.

In der Mitte der Figur 17 ist schematisch der Schnitt durch den Variator 43 dargestellt, während links von diesem Schnitt die antriebsseitige Wegscheibe 5 und die abtriebsseitige Festscheibe 46 in Draufsicht auf die Wölbung, also praktisch aus Sicht des Umschlingungsmittels 2, dargestellt ist. Rechts des Schnittes ist eine entsprechende Ansicht der antriebsseitigen Festscheibe 4 und der abtriebsseitigen Wegscheibe 33 dargestellt. Außerdem ist in beiden Draufsichten die Laschenkette 2 sowie deren Laufspur schematisch dargestellt. Die Drehrichtung der jeweiligen Kegelscheiben in Betrieb ist wiederum mit dem Pfeil 77 gekennzeichnet, sowie zusätzlich mit der Bezeichnung n_{B}. In der Zusammenschau mit Figur 16 und der Beschreibung hierzu ergibt sich wieder eine Darstellung des spiraligen Laufs der Laschenkette 2. Für die Relativbewegung der Kette in Betrieb, insbesondere hinsichtlich der Bewegungsrichtung 80, gilt das in Verbindung mit Figur 16 bereits Beschriebene.

Bei der Finish-Bearbeitung der einzelnen Kegelscheiben wird die jeweilige Kegelscheibe zunächst in Rotation versetzt. Auf die rotierende Kegelscheibe wird dann, wie in Verbindung mit der abtriebsseitigen Wegscheibe 33 dargestellt ist, ein Schleifmittel oder Schleifband 81 gedrückt, bis die gewünschte Oberflächenrauhigkeit erreicht ist, die beispielsweise im Bereich zwischen R_{z} 1,5 und 5,5 liegen kann.

Dabei wird die Drehrichtung der jeweiligen Kegelscheibe so gelegt, dass die Bewegungsrichtung 82 des Schleifbandes 81 relativ zur Lauffläche der Kegelscheibe ähnlich gerichtet ist wie die Relativbewegung des Umschlingungsmittels 2 zur Lauffläche im späteren Betrieb.

Um dies zu erreichen, ergibt sich für die jeweils dargestellte Position des Schleifbandes 81 folgendes:

Für die Wegscheibe 5 und die Festscheibe 4 des antriebsseitigen Kegelscheibensatzes 44 ist die Drehrichtung bei der Fertigung, also beim Finishen, mit derjenigen beim Betrieb identisch.

Bei der Fertigung des abtriebsseitigen Kegelscheibensatzes 45 ist die Drehrichtung der Festscheibe 46 und der Wegscheibe 33 bei der Fertigung derjenigen im Betrieb entgegengesetzt.

Hieraus ergibt sich dann, dass sich das Schleifband 81 relativ zur jeweiligen Kegelscheibe so bewegt, wie später im Betrieb die Laschenkette 2 bei ihrer Bewegung 80 von der Kreisbahn 78 auf die Spiralbahn 79.

Der Abrieb setzt sich teilweise im Schleifband 81 fest, so dass dafür gesorgt werden muss, dass unverbrauchte Schleifbandabschnitte zugeführt werden. Diese "Nachstellung" des Schleifbandes kann dabei ebenfalls in der Bewegungsrichtung 82 kontinuierlich oder getaktet erfolgen.

### Bezugszeichenliste

- 1: Kegelscheibenumschlingungsgetriebe
- 2: Laschenkette
- 2a: radial innere Stellung der Laschenkette
- 3: Welle
- 4: Festscheibe
- 5: Wegscheibe
- 6: Zahnrad
- 7: Kugellager
- 8: Scheibe
- 9: Wellenmutter
- 10: Drehmomentfühler
- 11: axial feststehende Spreizscheibe
- 12: axial verlagerbare Spreizscheibe
- 13: Spreizscheibenkonfiguration
- 14: Kugeln
- 15: erster Druckraum
- 16: zweiter Druckraum
- 17: Kolben-/Zylindereinheit
- 18: erster Druckraum
- 19: zweiter Druckraum
- 20: (drei) Kanäle (Einspeisung)
- 21: Kanal (auslassseitig)
- 22: Zentrierfläche
- 23: Geräuschdämpfungseinrichtung
- 24: (zentrale) Bohrung
- 25: Querbohrung(en)
- 26: Ausdrehung
- 27: Verzahnung
- 28: Verbindungsbohrungen
- 29: Hohlraum / Kammer
- 30: Steuerbohrungen
- 31: Stopfen
- 32: Tellerfeder
- 33: Wegscheibe (abtriebsseitig)
- 34: Versteifungsrippe
- 35: Versteifungskragen (außen)
- 36: Versteifungskragen (innen)
- 37: Nabe
- 38: Versteifungsring
- 39: Feder
- 40: Außenführung
- 41: Welle (abtriebsseitig)
- 42: Kegelscheibenteller
- 43: Variator
- 44: antriebsseitiger (Kegel-) Scheibensatz
- 45: abtriebsseitiger (Kegel-) Scheibensatz
- 46: Festscheibe abtriebsseitig
- 47: Wegscheibenhalsdurchmesser antriebsseitig
- 48: Wegscheibenhalsdurchmesser abtriebsseitig
- 49: Breite des Wegscheibentellers antriebsseitig
- 50: Breite des Festscheibentellers antriebsseitig
- 51: Breite des Festscheibentellers abtriebsseitig
- 52: Breite des Wegscheibentellers abtriebsseitig
- 53: Schiebesitzlänge klein antriebsseitig
- 54: Schiebesitzlänge groß antriebsseitig
- 55: Schiebesitzlänge groß abtriebsseitig
- 56: Schiebesitzlänge klein abtriebsseitig
- 57: Druckfeder
- 58: Blechteil (Dichtungslaufbahn)
- 59: Dichtung
- 60: Fliehölhaube
- 61: Flanschteil
- 62: Schiebesitz
- 63: Dichtung
- 64: Anfahrelement
- 65: erster Schiebesitz
- 66: zweiter Schiebesitz
- 67: Lagerung
- 68: Gehäuseunterbau
- 69: Hydraulikpumpe
- 70: Dichtung
- 71: Schweißnaht
- 72: Fliehölkammer
- 73: Verteilergetriebe
- 74: (weitere) Fliehölkammer
- 75: Zugtrum
- 76: Leertrum
- 77: Drehrichtung (in Betrieb)
- 78: Kreisbahn
- 79: Spiralbahn
- 80: Bewegungsrichtung (Kettenglied)
- 81: Schleifband
- 82: Bewegungsrichtung (Schleifband)

## Patentansprüche

1. Kegelscheibenumschlingungsgetriebe (1) mit antriebsseitigen und abtriebsseitigen Kegelscheibenpaaren, die jeweils eine Festscheibe (4, 46) und eine Wegscheibe (5, 33) aufweisen, die jeweils auf einer antriebsseitigen und einer abtriebsseitigen Welle (3, 41) angeordnet und über ein Umschlingungsmittel (2) zur Drehmomentübertragung verbindbar sind, wobei die Trumeigenfrequenz des Umschlingung mittels (2) permanent verstellt wird, **dadurch gekennzeichnet, dass** die Verstellung der Trumeigenfrequenz durch das Aufmodulieren einer Modulationsfrequenz auf den Anpressdruck erfolgt und die Modulationsfrequenz nicht im Bereich der Trumeigenfrequenz liegt.

2. Kegelscheibenumschlingungsgetriebe nach Anspruch 1, **dadurch gekennzeichnet, dass** die Modulationsfrequenz unterhalb der Trumeigenfrequenz liegt.

3. Kegelscheibenumschlingungsgetriebe nach einem der vorhergehenden Ansprüche, **dadurch gekennzeichnet, dass** die Verstellung der Trumeigenfrequenz Ober eine synchrone Modulation der Verstelldrücke der antriebsseitigen und abtriebsseitigen Kegelscheibenpaare (44, 45) erfolgt.

4. Kegelscheibenumschlingungsgetriebe nach einem der Ansprüche 1 bis 3, **dadurch gekennzeichnet, dass** die Modulationsfrequenz und/oder der Modulationshub so hoch sind, dass der Verstellgradient der Trumeigenfrequenz ein Aufschwingen des Trums beim Durchfahren einer Anregung verhindert.

5. Verfahren zum Betrieb eines Kegelscheibenumschlingungsgetriebes, **gekennzeichnet durch** einen der vorhergehenden Ansprüche.

6. Fahrzeug, **gekennzeichnet durch** ein Getriebe nach einem der vorhergehenden Ansprüche.

## Claims

1. Continuously variable cone-pulley transmission (1) with drive-input-side and drive-output-side conical disc pairs which have in each case one fixed disc (4, 46) and one moving disc (5, 33) which are arranged in each case on a drive-input-side and on a drive-output-side shaft (3, 41) and which can be connected via an endless chain belt (2) for torque transmission, wherein the strand natural frequency of the endless chain belt (2) is permanently adjusted, **characterized in that** the adjustment of the strand natural frequency takes place by modulating a modulation frequency onto the contact pressure, and the modulation frequency does not lie in the range of the strand natural frequency.

2. Continuously variable cone-pulley transmission according to Claim 1, **characterized in that** the modulation frequency lies below the strand natural frequency.

3. Continuously variable cone-pulley transmission according to one of the preceding claims, **characterized in that** the adjustment of the strand natural frequency takes place by means of a synchronous modulation of the adjusting pressures of the drive-input-side and drive-output-side conical disc pairs (44, 45).

4. Continuously variable cone-pulley transmission according to one of Claims 1 to 3, **characterized in that** the modulation frequency and/or the modulation amplitude are so high that the adjusting gradient of the strand natural frequency prevents an unstable oscillation of the strand when passing through an excitation.

5. Method for operating a continuously variable cone-pulley transmission, **characterized by** one of the preceding claims.

6. Vehicle, **characterized by** a transmission according to one of the preceding claims.

## Revendications

1. Transmission à courroie à poulie conique (1), comprenant, du côté de l'entraînement et de la sortie, des paires de poulies coniques, qui présentent chacune une poulie fixe (4, 46) et une poulie mobile (5, 33), qui sont disposées à chaque fois sur un arbre du côté de l'entraînement et du côté de la sortie (3, 41), et qui peuvent être connectées en vue du transfert de couple par le biais d'un moyen de courroie (2), la fréquence propre du tronçon du moyen de courroie (2) étant réglée de manière permanente, **caractérisée en ce que** le réglage de la fréquence propre du tronçon s'effectue par la modulation d'une fréquence de modulation sur la pression d'application et la fréquence de modulation ne se situe pas dans la plage de fréquence propre du tronçon.

2. Transmission à courroie à poulie conique selon la revendication 1, **caractérisée en ce que** la fréquence de modulation est en dessous de la fréquence propre du tronçon.

3. Transmission à courroie à poulie conique selon l'une quelconque des revendications précédentes, **caractérisée en ce que** le réglage de la fréquence propre du tronçon s'effectue par le biais d'une modulation synchrone des pressions de réglage des paires de poulie (44, 45) du côté de l'entraînement et du côté de la sortie.

4. Transmission à courroie à poulie conique selon l'une quelconque des revendications 1 à 3, **caractérisée en ce que** la fréquence de modulation et/ou la course de modulation sont si élevées que le gradient de réglage de la fréquence propre du tronçon empêche une oscillation du tronçon lors du passage par une excitation.

5. Procédé pour faire fonctionner une transmission à courroie à poulie conique, **caractérisé par** l'une quelconque des revendications précédentes.

6. Véhicule, **caractérisé par** une transmission selon l'une quelconque des revendications précédentes.
